# FASCICULE DE BREVET EUROPEEN

(11) **EP 1 058 002 B1**
(45) Date de publication et mention de la délivrance du brevet: **01.10.2003**
(21) Numéro de dépôt: 00400980.9
(22) Date de dépôt: 10.04.2000
(51) Int. Cl.: F03C 1/04

(54) **Sélecteur de cylindrée pour un moteur hydraulique evitant un choc lors du changement de cylindrée**
Stossfrei arbeitender Wähler zur Veränderung des Verdrängungsvolumens eines hydraulischen Motors
Volumetric displacement selector for hydraulic motor with smooth selection

(30) Priorité: 04.06.1999 FR 9907075
(43) Date de publication de la demande: 06.12.2000
(73) Titulaire: POCLAIN HYDRAULICS INDUSTRIE, 60411 Verberie (FR)
(72) Inventeur: Allart, Bernard, 60800 Crepy en Valois (FR); Bigo, Louis, 60200 Compiegne (FR); Camilleri, Jean-Pierre, 60150 Le Plessis-Brion (FR); Fontaine, Jacques, 60410 Verberie (FR); Legai, Marièle, 60200 Compiegne (FR); Martin, Louis, 60200 Compiegne (FR)
(74) Mandataire: Intès, Didier Gérard André

(56) Documents cités:
- EP-A- 0 176 427
- EP-A- 0 526 333
- EP-A- 0 547 947
- FR-A- 2 611 816
- FR-A- 2 678 322
- FR-A- 2 706 538

## Description

La présente invention concerne un dispositif de sélection de la cylindrée d'un moteur hydraulique ayant au moins deux cylindrées actives de fonctionnement, le moteur comprenant au moins deux conduits principaux, respectivement un conduit d'alimentation en fluide et un conduit d'échappement de fluide, le dispositif de sélection comprenant un tiroir disposé dans un alésage dans lequel s'ouvrent au moins trois voies de communication aptes, par l'intermédiaire de conduits de distribution du moteur, à établir une communication sélective entre les conduits principaux et les cylindres dudit moteur, la troisième voie de communication étant destinée à être raccordée à l'un des conduits principaux du moteur, le dispositif ayant des moyens de sélection qui, dans une première position stable du tiroir, mettent en communication la deuxième voie de communication avec la troisième voie de communication par un passage entre les deuxième et troisième voies tout en isolant lesdites deuxième et troisième voies de la première voie de communication et qui, dans une deuxième position stable du tiroir, mettent en communication la deuxième voie de communication avec la première voie de communication par un passage entre les première et deuxième voies tout en isolant lesdites première et deuxième voies de la troisième voie de communication, les moyens de sélection étant conformés de telle sorte que, lors du déplacement du tiroir entre lesdites positions stables, il existe une situation provisoire dans laquelle le passage entre les première et deuxième voies et le passage entre les deuxième et troisième voies sont simultanément ouverts.

L'invention s'applique par exemple à un moteur hydraulique ayant deux conduits principaux, soit un conduit d'alimentation et un conduit d'échappement.

Elle s'applique également à des moteurs ayant trois conduits principaux, tels que, par exemple, ceux qui sont décrits dans FR 2 570 157 et dans FR 2 685 263. Dans ces moteurs, les deux cylindrées se comportent comme deux moteurs élémentaires ayant chacun un premier et un deuxième conduit élémentaire, servant à l'alimentation ou l'échappement. Pour ces deux moteurs élémentaires, le premier conduit élémentaire peut être mis en commun, formant ainsi un premier conduit principal du moteur global, tandis que les deuxièmes conduits élémentaires sont séparés, formant ainsi le deuxième et le troisième conduit principal du moteur global.

Le dispositif de l'invention peut équiper un moteur ayant deux cylindrées actives de fonctionnement. L'invention trouve également une application dans des moteurs hydrauliques à plusieurs tiroirs de sélection de cylindrée tels que des moteurs à trois cylindrées distinctes non nulles, à deux tiroirs de sélection de cylindrée, par exemple du type décrit dans FR 2 611 816.

Par exemple, le moteur comprend trois groupes de conduits de distribution, les conduits de distribution du premier groupe étant raccordés en permanence à un premier conduit principal, tandis que les conduits de distribution des troisièmes groupes sont raccordés en permanence au deuxième conduit principal. Les trois voies de communication qui s'ouvrent dans l'alésage du dispositif de sélection sont respectivement destinées à être reliées en permanence à chacun des trois groupes de conduit de distribution. Ainsi, dans la première position stable du tiroir, les deuxième et troisième groupes de conduits de distribution sont reliés, tandis que le premier groupe de ces conduits est isolé des autres. Dans la deuxième position stable, ce sont les premier et deuxième groupes de conduits de distribution qui sont reliés, tandis que le troisième en est isolé.

Par exemple, dans le sens préférentiel de fonctionnement d'un tel moteur hydraulique équipé du dispositif de sélection de la cylindrée (marche avant d'un véhicule entraîné par ce moteur), le premier conduit principal auquel sont raccordés les conduits de distribution du premier groupe, est un conduit d'échappement de fluide, tandis que le deuxième conduit principal auquel sont raccordés les conduits de distribution du troisième groupe est un conduit d'alimentation en fluide. Ainsi, en grande cylindrée, les conduits de distribution du premier groupe servent à l'échappement de fluide, tandis que les conduits de distribution du troisième groupe et également les conduits de distribution du deuxième groupe servent à l'alimentation.

Dans le même sens de fonctionnement, en petite cylindrée, seuls les conduits de distribution du troisième groupe servent à l'alimentation, tandis que les conduits de distribution du deuxième groupe sont raccordés à ceux du premier groupe et mis à la pression de refoulement, de sorte que ces conduits du deuxième groupe ne sont pas alimentés en fluide à la haute pression et ne concourent pas à la délivrance du couple moteur. Ainsi, la partie de la cylindrée correspondant aux conduits de distribution du deuxième groupe est inactive.

Dans l'autre sens de fonctionnement du moteur, en petite cylindrée, seuls les conduits de distribution du troisième groupe sont raccordés au refoulement, tandis que les conduits de distribution des premier et deuxième groupes sont tous raccordés à l'alimentation. Ainsi, par exemple dans le cas d'un moteur hydraulique à pistons, les pistons qui se trouvent reliés successivement à un conduit du deuxième groupe et à un conduit du premier groupe ont tendance à rester, entre ces deux raccordements successifs, dans leur position de sortie hors des cylindres et ne concourent pas non plus au couple moteur. Ces pistons ont toutefois tendance à développer une certaine résistance au couple moteur.

Lors du passage du sélecteur entre ses deux positions stables, la situation provisoire dans laquelle les passages entre les première et deuxième voies et entre les deuxième et troisième voies sont simultanément ouverts sert à éviter un blocage du moteur lors du déplacement du tiroir de sélection. Dans cette situation provisoire, tous les conduits de distribution communiquent entre eux et le moteur est en roue libre.

Pour un débit constant de la pompe alimentant le conduit principal d'alimentation, on sait que, dans la position de grande cylindrée, le moteur développe un couple élevé pour une vitesse relativement lente tandis que, en petite cylindrée, le couple développé est moindre et la vitesse est supérieure.

Lorsque, dans le sens préférentiel de fonctionnement du moteur, on commande le déplacement du tiroir de sélection de sa deuxième position stable de petite cylindrée vers sa première position stable de grande cylindrée, on passe d'une situation dans laquelle le débit de fluide délivré par la pompe servait à alimenter seulement les conduits de distribution du troisième groupe à une situation dans laquelle le même débit de fluide doit alimenter les conduits de distribution des deuxième et troisième groupes. Par conséquent, la pression de fluide dans le conduit principal d'alimentation a tendance à baisser et elle est maintenue à une valeur empêchant les phénomènes de cavitation par un apport de fluide provenant d'une pompe de gavage, s'ajoutant à celui de la pompe principale. Cet appel d'un débit de gavage est lié au fait que la vitesse du moteur continue d'être rapide sous l'effet de l'inertie de la charge entraînée par ce moteur.

A ce moment, le débit de fluide refoulé par le conduit principal d'échappement devient brusquement supérieur au débit de fluide préalablement refoulé puisqu'il est lié non seulement au débit de fluide alimenté par la pompe principale, mais également au fluide alimenté par la pompe de gavage. La pression dans le conduit d'échappement augmente donc brusquement et la charge entraînée par le moteur est brusquement freiné. Ce freinage est brutal et s'apparente à un choc relativement violent.

Lorsque le moteur sert à l'entraînement d'un véhicule, à défaut d'un équipement particulier, le conducteur de ce véhicule ne peut prévenir ce choc qu'en commandant, en même temps qu'il commande le passage de la petite cylindrée vers la grande cylindrée une augmentation momentanée du débit de fluide délivré par la pompe principale, lorsque le circuit d'alimentation est un circuit fermé.

Il existe également des systèmes sophistiqués pour éviter cet effet de choc, qui font appel à un asservissement de la pression délivrée par la pompe et de la vitesse du moteur. Ces systèmes présentent l'inconvénient d'être coûteux.

A l'inverse, lors du déplacement du tiroir de sélection de sa première position stable de grande cylindrée vers sa deuxième position stable de petite cylindrée, il se produit un effet d'accélération relativement brutal. Bien que le choc soit moins important que dans le premier cas, puisque, lors du passage en petite cylindrée, le couple moteur diminue également, il est ressenti comme un défaut par le conducteur du véhicule.

L'invention s'applique également à un moteur ayant deux cylindrées distinctes de fonctionnement, et comprenant quatre groupes de conduits de distribution. En grande cylindrée, ces groupes sont reliés deux par deux pour être respectivement mis en communication avec un conduit principal d'alimentation et un conduit principal d'échappement. En petite cylindrée un groupe est relié à l'alimentation, un autre groupe à l'échappement, et les deux groupes correspondant à la cylindrée désactivée sont reliés entre eux, par exemple en étant mis en communication avec un conduit auxiliaire tel qu'un conduit de gavage.

Dans ce cas également, le passage brutal d'une cylindrée à une autre occasionne un choc qui peut être désagréable, voire dangereux.

Le moteur peut également avoir davantage de cylindrées, par exemple trois cylindrées distinctes, soit une grande, une moyenne ou une petite cylindrée. Dans ce cas également, il convient d'éviter des chocs brutaux lors du passage de l'une à l'autre de ces cylindrées.

La présente invention vise à proposer un système simple pour réduire l'effet de choc lors du passage d'une cylindrée à une autre.

Ce but est atteint grâce au fait que le dispositif de sélection de la cylindrée selon l'invention comprend des moyens pour, dans au moins un sens de déplacement du tiroir entre ses première et deuxième positions stables, entretenir pour un laps de temps ladite situation provisoire selon une phase intermédiaire au cours de laquelle la section d'au moins l'un des passages constitués par le passage entre les première et deuxième voies et par le passage entre les deuxième et troisième voies est restreinte.

De préférence, pendant la phase intermédiaire, les sections des passages entre les première et deuxième voies et entre les deuxième et troisième voies sont différentes.

Le laps de temps pendant lequel la phase intermédiaire est maintenue est déterminé en fonction des spécificités du moteur et des objets (véhicule...) qu'il est destiné à entraîner, de manière à être suffisant pour permettre, en entretenant la phase intermédiaire, d'éviter une variation brusque du débit de fluide dans les conduits principaux. Pour autant la situation provisoire qui est maintenue ne correspond pas à une situation de court-circuit puisque, du fait de la présence d'une restriction sur la section d'au moins l'un des passages entre les première et deuxième voies et entre les deuxième et troisième voies, les conduits de distribution ne communiquent pas librement entre eux.

Par exemple, on peut choisir de faire en sorte d'entretenir cette situation provisoire lors du passage de la petite cylindrée à la grande cylindrée.

Pour un moteur, entraînant une des roues d'un véhicule de 5 tonnes se déplaçant à une vitesse de l'ordre de 10 km/h au moment du changement de cylindrée et dont les couples en petite et en grande cylindrée sont respectivement de 1500 N.m et 3000 N.m, le laps de temps pendant lequel la situation provisoire est entretenue peut être de l'ordre de 2/10 de seconde à 5/10 de seconde, voire 1 seconde. Il en est de même pour un moteur entraînant l'un des organes de déplacement d'un engin de 24 tonnes (12 tonnes par moteur) à une vitesse de l'ordre de 3 km/h au moment du changement de cylindrée et dont les couples en petite et en grande cylindrée sont respectivement de 20000 N.m et 40000 N.m. Pour entretenir la situation provisoire, le déplacement du tiroir peut être ralenti ou freiné, voire sensiblement stoppé pendant le laps de temps nécessaire.

Par exemple, pour un moteur ayant trois groupes de distribution reliés en permanence à chacune des trois de voies de communication, et pour lequel les première et deuxième positions stables du tiroir sont respectivement des positions de grande cylindrée et de petite cylindrée, on peut choisir d'entretenir la phase intermédiaire lors du passage de la petite cylindrée à la grande cylindrée, en faisant en sorte que, dans cette phase intermédiaire, le passage entre les première et deuxième voies forme une restriction , tandis que le passage entre les deuxième et troisième voies est sensiblement libre ou, tout au moins, forme une restriction moindre, c'est-à-dire laisse passer un débit de fluide plus important que l'autre passage.

Dans ce cas, si l'on considère que le moteur fonctionne dans son sens préférentiel, dans lequel les conduits de distribution du troisième groupe sont raccordés à l'alimentation en fluide, la mise en communication entre les deuxième et troisième voies fait augmenter la cylindrée devant être alimentée, de sorte que la pression a tendance à baisser dans la conduite d'alimentation, cette baisse pouvant être compensée par un gavage. Dans le même temps, la mise en communication partielle entre la première et la deuxième voies, par l'intermédiaire de la restriction, limite l'augmentation de la pression dans le conduit de refoulement. En effet, la restriction occasionne une perte de charge. Ceci permet de gérer l'apparition de la contre-pression dans ce conduit de refoulement et de maîtriser en conséquence le freinage du moteur.

Le déplacement du tiroir étant ralenti dans la phase intermédiaire, la mise en communication restreinte entre les première et deuxième voies se poursuit dans le temps nécessaire à ce que l'énergie cinétique de l'engin ou de la charge entraînée par le moteur soit consommée par l'effet de freinage dudit moteur.

Lorsque que le moteur fonctionne dans l'autre sens, les premier et troisième groupes de conduits de distribution étant respectivement raccordés cette fois à l'alimentation et à l'échappement de fluide, le passage de petite cylindrée en grande cylindrée fait que tous les conduits des deuxième et troisième groupes de conduits de distribution se trouvent raccordés à l'échappement, de sorte que le débit dans le conduit principal d'échappement augmente. Ce débit étant supérieur à celui entrant dans la pompe, il doit s'échapper par une soupape de surpression. La pression ainsi provoquée entraîne le freinage du moteur.

Dans la position intermédiaire du tiroir, une partie du débit supplémentaire peut passer du deuxième au premier groupe de conduits de distribution avec une contre-pression comparable à celle produite dans le sens préférentiel de fonctionnement décrit plus haut.

La restriction par laquelle les première et deuxième voies communiquent en position intermédiaire a donc un effet semblable dans les deux sens de fonctionnement du moteur.

Comme dans l'exemple précité, on peut choisir de mettre en oeuvre l'invention de manière à limiter le choc seulement dans un sens de déplacement du tiroir, par exemple lors du passage de la petite cylindrée à la grande cylindrée.

On peut également choisir de limiter le choc dans les deux sens de déplacement, en faisant en sorte que, dans ces deux sens, existe une phase intermédiaire comme indiqué ci-dessus. Comme on le verra dans la suite, on peut choisir que, dans cette phase intermédiaire, la section d'au moins l'un des passages entre les première et deuxième voies et entre les deuxième et troisième voies soit réduite, tandis que la section de l'autre passage permettrait une circulation de fluide sensiblement libre.

On peut également choisir que les sections de ces deux passages soient restreintes ou calibrées, en étant différentes.

Ainsi, selon une première variante, dans la phase intermédiaire, la section de l'un des passages entre les première et deuxième voies et entre les deuxième et troisième voies est restreinte, tandis que la circulation de fluide dans l'autre desdits passages est sensiblement libre.

Selon une deuxième variante, dans la phase intermédiaire, les sections de chacun des passages entre les première et deuxième voies et entre les deuxième et troisième voies sont restreintes.

Avantageusement, le dispositif selon l'invention comprend des moyens de commande du déplacement du tiroir dans le sens comprenant la phase intermédiaire aptes à commander une première étape de déplacement rapide du tiroir, de la position initiale de ce dernier à une position correspondant au début de la phase intermédiaire, et une étape de déplacement freiné durant laquelle se déroule ladite phase intermédiaire.

Grâces à ces dispositions, le temps total de passage d'une cylindrée à l'autre n'est pas sensiblement augmenté, puisque le déplacement du tiroir est ralenti juste pendant le déroulement de la phase intermédiaire, tandis que les autres phases de déplacement s'effectuent rapidement.

Par exemple, la vitesse de déplacement du tiroir durant la phase intermédiaire est tout au plus égale au tiers de sa vitesse de déplacement pendant la première étape de déplacement rapide.

Par exemple, le ralentissement est tel que la durée de la phase intermédiaire est au moins égale au 2/3 de la durée totale du déplacement du tiroir entre ces deux positions extrêmes.

Les moyens de commande sont avantageusement aptes à commander, en outre, une deuxième étape de déplacement rapide du tiroir à l'issue de la phase intermédiaire.

Les moyens de commande du déplacement du tiroir peuvent par exemple être purement hydrauliques, ou bien purement électroniques. Ils peuvent encore être des moyens combinant des moyens hydrauliques et des moyens électroniques. Lorsqu'ils sont présents, les moyens électroniques comprennent avantageusement un servomécanisme.

Avantageusement, la section qui est restreinte pendant la phase intermédiaire reste sensiblement constante (ou, tout au moins, elle varie très progressivement) pendant au moins une partie de la durée de ladite phase intermédiaire.

Durant cette phase, il n'y a donc pas de variations brutales de la section du passage concerné, de sorte que la pression dans les conduits qui lui sont raccordés ne varie pas brutalement.

On peut choisir que cette section reste sensiblement constante pendant une majeure partie de la durée de la phase intermédiaire, mesurée en longueur de déplacement et/ou en durée du déplacement du tiroir. Par exemple, elle peut rester sensiblement constante pendant un laps de temps égal à plus de la moitié de la durée totale de la phase intermédiaire et, de préférence au moins égal aux 2/3 de cette durée.

On peut également choisir de faire varier la section du passage en adaptant sa forme (forme oblongue à section progressive ou bien choix de plusieurs perçages de restriction découverts ou recouverts successivement).

Selon une disposition avantageuse, l'un des passages entre les première et deuxième voies et entre les deuxième et troisième voies dont la section est restreinte pendant la phase intermédiaire présente une première et une deuxième partie, la première partie permettant un débit de fluide sensiblement libre, étant ouverte dans la position initiale du tiroir avant un déplacement comprenant la phase intermédiaire, et étant fermée dans la phase intermédiaire, et la deuxième partie étant équipée d'une restriction qui délimite l'ouverture dudit passage restreint pendant la phase intermédiaire.

La première partie du passage concerné présente une section relativement large qui assure une communication libre entre les conduits de distribution qui lui sont raccordés. Le fait que l'autre passage ne s'ouvre que lorsque cette première partie s'est fermée permet d'éviter une communication sensiblement libre entre tous les conduits de distribution, de sorte que le moteur ne se trouve pas en roue libre lors du déplacement du tiroir de sélection. La restriction qui permet d'éviter le court-circuit est réalisée par la deuxième partie dudit passage concerné qui, elle, est ouverte dans la phase intermédiaire alors même que l'autre passage est également ouvert.

Selon une réalisation avantageuse, les moyens de commande du déplacement du tiroir comprennent une première chambre de commande formée dans l'alésage, à une extrémité du tiroir, et une deuxième chambre de commande, formée dans une cavité de cette extrémité du tiroir et séparée de la première chambre par un piston de commande disposé dans cette cavité, la première chambre de commande étant susceptible d'être raccordée à des premiers moyens de pilotage pour permettre le déplacement de l'ensemble constitué par le tiroir et le piston de commande dans une première étape de déplacement rapide, à l'issue de laquelle le piston de commande se trouve dans une position extrême, et la deuxième chambre de commande étant susceptible d'être raccordée à des deuxièmes moyens de pilotage pour permettre le déplacement du tiroir par rapport au piston de commande dans une deuxième étape de déplacement lent.

Ces dispositions constituent une manière simple et peu encombrante de réaliser les moyens de commande du tiroir.

Les moyens de commande du déplacement du tiroir comprennent avantageusement une troisième chambre de commande qui sert à commander les déplacements du tiroir dans l'autre sens.

Selon une autre réalisation avantageuse, les moyens de commande du déplacement du tiroir comprennent une chambre de commande raccordée à un conduit de pilotage, des moyens de dosage d'un volume de fluide de pilotage prévus pour permettre la circulation sensiblement libre dans le conduit de pilotage d'un volume de fluide déterminé dans au moins un premier sens de circulation commandant un déplacement du tiroir dans un premier sens comprenant une première phase intermédiaire et des moyens pour ne permettre la circulation d'un volume supplémentaire de fluide dans le conduit de pilotage dans ce premier sens de circulation que par l'intermédiaire d'une première restriction.

Les moyens de dosage du volume de fluide, de même que la première restriction, peuvent être disposés à l'extérieur de l'alésage du dispositif de sélection de la cylindrée, voire même à l'extérieur du moteur.

Le conduit de pilotage comprend avantageusement une chambre de dosage dans laquelle est disposé un piston de dosage susceptible sous l'effet d'un fluide de pilotage, d'être déplacé entre une première et une deuxième position pour provoquer la circulation, dans un tronçon du conduit de pilotage s'étendant entre la chambre de dosage et la chambre de commande, d'un volume de fluide correspondant à la course de ce piston ; lorsque le piston de dosage occupe sa deuxième position de pilotage, la circulation d'un volume supplémentaire de fluide dans ledit tronçon n'est possible, dans au moins le premier sens de circulation, que par l'intermédiaire de la première restriction.

Le piston de dosage constitue un dispositif simple pour doser le volume de fluide de pilotage précité.

L'invention sera bien comprise et ses avantages apparaîtront mieux à la lecture de la description détaillée qui suit, de modes de réalisation décrits à titre d'exemples. La description se réfère aux dessins annexés sur lesquels :
- la figure 1 est une vue en coupe axiale d'un moteur hydraulique à pistons radiaux équipé d'un dispositif classique de sélection de la cylindrée ;
- la figure 2 représente un schéma hydraulique incluant un moteur hydraulique à deux cylindrées équipé d'un dispositif de sélection de la cylindrée conforme à l'invention, pour un circuit fermé ;
- les figures 3A, 3B et 3C illustrent les courbes de variation des sections des passages entre les première et deuxième voies d'une part et entre les deuxième et troisième voies d'autre part, en fonction du déplacement du tiroir, la figure 3A se rapportant à un dispositif classique de sélection de la cylindrée, tandis que les figures 3B et 3C se rapportent à des dispositifs conformes à l'invention ;
- les figures 4A, 4B et 4C montrent trois positions du tiroir de sélection d'un dispositif conforme à l'invention ;
- les figures 5A, 5B et 5C sont des vues analogues aux figures 4A, 4B et 4C pour une variante de réalisation avantageuse, la figure 5D étant une vue agrandie de la partie V de la figure 5B ;
- les figures 6 à 10 montrent des variantes de réalisation ayant trait, en particulier, aux moyens de commande du tiroir de sélection du dispositif de l'invention, les figures 6 à 9 montrant des commandes hydrauliques et la figure 10 montrant une commande électronique combinée à une commande électro-hydraulique ;
- la figure 11 illustre les courbes de variations de vitesse de déplacement du tiroir en fonction de sa course, dans chacun de ses deux sens de déplacement ;
- la figure 12 est une vue partielle en coupe axiale d'un moteur comprenant un dispositif de sélection de la cylindrée conforme à l'invention équipé de moyens de commande hydraulique du déplacement du tiroir permettant de réaliser une phase intermédiaire de déplacement dans chacun des deux sens de déplacement du tiroir ;
- la figure 13 montre une variante de la figure 12;
- les figures 14A, 14B, 14C et 14D sont des vues partielles en coupe axiale de variantes des figures 12 et 13, illustrant quatre positions distinctes du tiroir de sélection de la cylindrée.

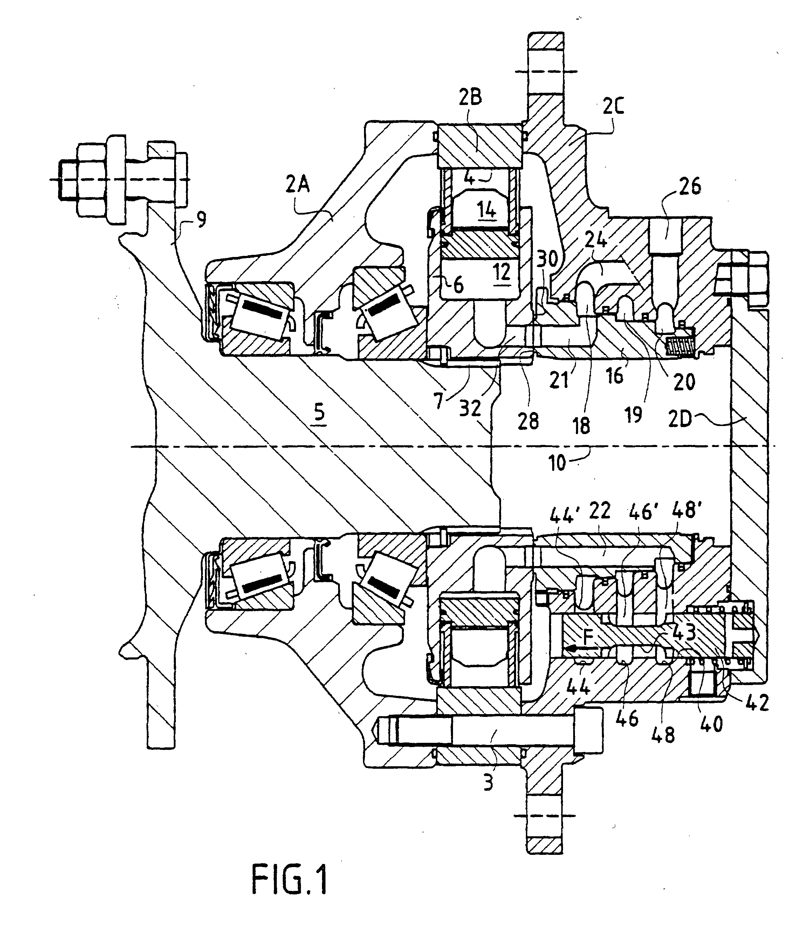

La figure 1 montre un moteur hydraulique comprenant un carter fixe en trois parties, 2A, 2B et 2C, assemblées par des vis 3. La partie 2C du carter est fermée axialement par une plaque radiale 2D également fixée par des vis. Une came de réaction ondulée 4 est réalisée sur la partie 2B du carter.

Le moteur comprend un bloc-cylindres 6 qui est monté à rotation relative autour d'un axe de rotation 10 par rapport à la came 4 et qui comporte une pluralité de cylindres radiaux 12, susceptibles d'être alimentés en fluide sous pression et à l'intérieur desquels sont montés coulissants des pistons radiaux 14.

Le bloc-cylindres 6 entraîne en rotation un arbre 5 qui coopère avec lui par des cannelures 7. L'extrémité de l'arbre opposée au couvercle 2D du carter comporte une bride de sortie 9.

Le moteur comprend encore un distributeur interne de fluide 16 qui est solidaire du carter vis-à-vis de la rotation autour de l'axe 10. Entre le distributeur 16 et la face axiale interne de la partie 2C du carter sont formées des gorges de distribution, respectivement une première gorge 18, une deuxième gorge 19 et une troisième gorge 20. Les conduits de distribution du distributeur 16 sont répartis en un premier groupe de conduits qui, comme le conduit 21, sont tous reliés à la gorge 18, un deuxième groupe de conduits (non représentés) qui sont reliés à la gorge 19 et un troisième groupe de conduits qui, comme le conduit 22, sont reliés à la gorge 20. La première gorge 18 est reliée en permanence à un premier conduit principal 24 auquel sont donc reliés en permanence tous les conduits de distribution du premier groupe. La troisième gorge 20 est reliée en permanence à un deuxième conduit principal 26 auquel sont donc reliés en permanence tous les conduits de distribution du troisième groupe.

Selon le sens de rotation du moteur, les conduits principaux 24 et 26 jouent respectivement le rôle d'un conduit d'alimentation et d'un conduit d'échappement en fluide ou le rôle inverse.

De manière connue en soi, les conduits de distribution débouchent dans une face de distribution 28 du distributeur interne de fluide, en appui contre une face de communication 30 du bloc-cylindres. Chaque cylindre 12 a un conduit de cylindre 32 qui débouche dans cette face de communication 30 de telle sorte que, lors de la rotation relative du bloc-cylindres par rapport à la came, les conduits de cylindre sont alternativement en communication avec les conduits de distribution des différents groupes.

Le dispositif de sélection de la cylindrée du moteur de la figure 1 comprend un alésage 40, qui s'étend axialement dans la partie 2C du carter et dans lequel est disposé un tiroir de sélection 42 axialement mobile. L'alésage 40 comprend trois voies de communication, à savoir une première voie de communication 44 reliée en permanence à la gorge 18, et donc aux conduits de distribution 21 du premier groupe, une deuxième voie de communication 46, reliée en permanence à la gorge 19 et donc aux conduits de distribution du deuxième groupe, et une troisième voie de communication 48 reliée en permanence aux conduits de distribution 22 du troisième groupe par la gorge 20.

Les voies de communication sont réalisées par des gorges, pratiquées dans l'alésage 40 et respectivement reliées aux gorges 18, 19 et 20, respectivement par des conduits de liaison 44', 46' et 48'. Le tiroir 42 est mobile entre deux positions extrêmes à l'intérieur de l'alésage 40. Il est représenté dans sa première position dans laquelle, par une gorge 43 pratiquée à sa périphérie externe, il met en communication les gorges 46 et 48, tandis que la gorge 44 en est isolée. Dans cette situation, les conduits de distribution des deuxième et troisième groupes sont raccordés au conduit principal 26, par exemple un conduit d'alimentation, tandis que les conduits de distribution du premier groupe 18 sont raccordés au conduit principal 24, par exemple d'échappement.

Le nombre de conduits de distribution du premier groupe 18 est égal à la somme des nombres de conduits de distribution des deuxième et troisième groupes et les conduits de distribution du premier groupe sont intercalés entre ceux des deuxième et troisième groupes. Par conséquent, dans cette situation, les conduits de cylindres sont alternativement reliés à l'alimentation et à l'échappement au cours de la rotation relative du bloc-cylindres et de la came. Le moteur peut donc fonctionner avec sa cylindrée maximale, ou grande cylindrée.

Le tiroir est susceptible d'occuper une autre position, dans laquelle il est déplacé dans le sens de la flèche F et dans laquelle il met en communication les gorges 44 et 46, tandis qu'il isole de ces gorges la gorge 48. Par conséquent, dans cette situation, les conduits de distribution du troisième groupe restent seuls reliés au conduit principal 26, tandis que les conduits de distribution des premier et deuxième groupes sont tous reliés au conduit principal 24. Les lobes de came qui correspondent aux conduits de distribution 20 sont donc actifs puisque les pistons qui passent en regard de ces lobes de came lors de la rotation relative du bloc-cylindres et de la came se trouvent alternativement raccordés à un conduit de distribution du troisième groupe et à un conduit de distribution du premier groupe, qui sont respectivement raccordés à chacun des deux conduits principaux. En revanche, les lobes de came qui correspondent aux conduits de distribution du deuxième groupe sont inactifs, puisque les cylindres des pistons qui passent en regard de ces lobes de came se trouvent successivement raccordés à un conduit de deuxième groupe et à un conduit du premier groupe qui sont reliés au même conduit principal.

La figure 1 montre un dispositif de sélection de la cylindrée classique et l'on comprend que la géométrie de la gorge 43 lui permet, lorsque le tiroir se trouve dans sa position médiane entre ses première et deuxième positions extrêmes, de faire momentanément communiquer les voies de communication 44, 46 et 48. Cette position médiane correspond à une situation intermédiaire dans laquelle les trois voies de communication 44, 46 et 48 sont provisoirement en communication, de sorte que tous les conduits de distribution sont reliés entre eux et que le moteur fonctionne en roue libre.

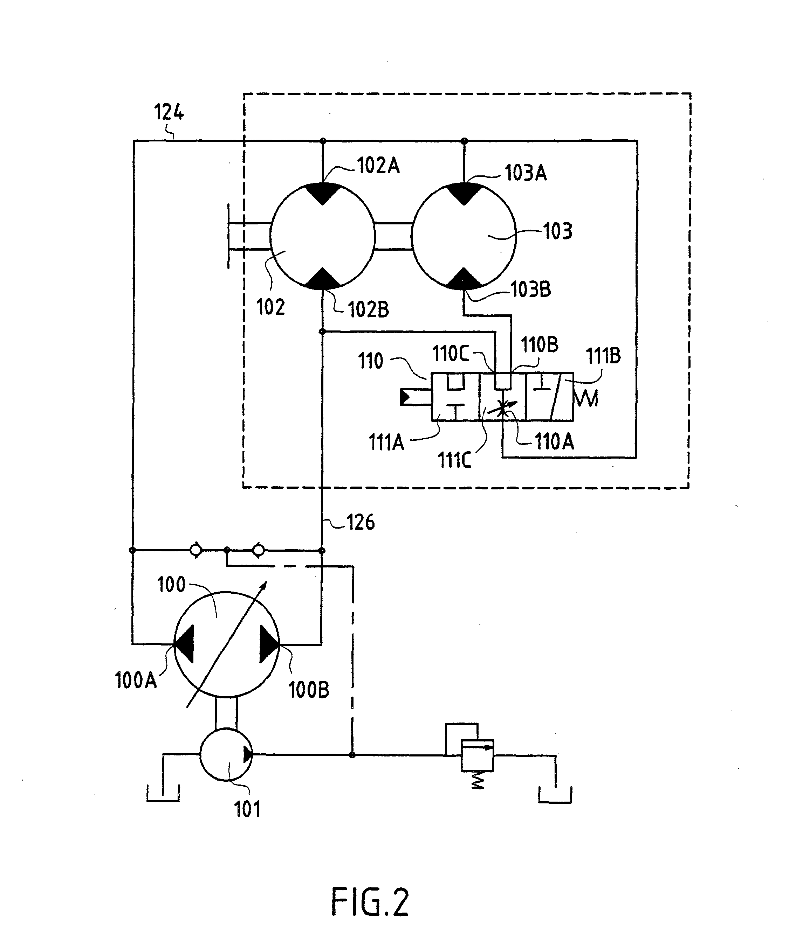

On décrit maintenant la figure 2 sur laquelle on a représenté schématiquement le dispositif de sélection conforme à l'invention. Ce circuit, tel que représenté, est simplifié et comporte seulement les éléments nécessaires à la bonne compréhension de cette figure, certains éléments supplémentaires étant omis, tels que certains moyens de commande et de sécurité usuels.

Ce circuit est un circuit fermé qui comprend une pompe principale 100, à laquelle est associée une pompe de gavage 101. Les deux cylindrées de fonctionnement du moteur alimentées par la pompe 100 sont respectivement désignées par les références 102 et 103. Une des sorties de la pompe principale est reliée à un premier conduit principal 124, auquel sont reliés les conduits de distribution d'un premier groupe de conduits de distribution du moteur.

Les deux cylindrées du moteur se comportent chacune comme un moteur élémentaire et sont donc représentées schématiquement comme telles sur la figure 2. Ainsi, le moteur élémentaire 102 présente deux orifices principaux, respectivement désignés par les références 102A et 102B, de même que le moteur élémentaire 103 comporte deux orifices principaux, respectivement 103A et 103B.

Les orifices 102A et 103A sont en permanence reliés entre eux et sont raccordés au premier conduit principal 124 précédemment évoqué, lui-même relié à un premier orifice 100A de la pompe 100. De même, l'orifice 102B du moteur 102 est relié en permanence à un deuxième conduit principal 126, lui-même raccordé au deuxième orifice 100B de la pompe.

Le circuit de la figure 2 comprend un sélecteur à trois voies 110, comprenant une première voie 110A raccordée en permanence au premier conduit principal 124, une deuxième voie 110B raccordée en permanence à l'orifice 103B du moteur 103 et une troisième voie 110C raccordée en permanence à l'orifice 102B du moteur 102.

Le moteur du schéma de la figure 2 diffère de celui de la figure 1 par la configuration du dispositif de sélection de la cylindrée. Pour le reste, on comprend que les conduits de distribution du moteur de la figure 2 qui sont reliés aux orifices 102A et 103A des moteurs élémentaires 102 et 103 correspondent aux conduits de distribution du premier groupe du moteur de la figure 1, tandis que les conduits de distribution du moteur élémentaire 102 qui sont reliés à l'orifice 102B correspondent à ceux du troisième groupe et que les conduits de distribution du moteur élémentaire 103 qui sont reliés à l'orifice 103B correspondent à ceux du deuxième groupe. Les trois voies 110A, 110B et 110C du sélecteur 110 de la figure 2 correspondent respectivement aux première, deuxième et troisième voies 44, 46 et 48 de celui de la figure 1.

Le sélecteur 110 présente deux positions extrêmes stables et une position intermédiaire instable. Dans la première position stable 111A, les deuxième et troisième voies 110B et 110C sont reliées entre elles et sont raccordées au conduit 126 tandis que la voie 110A est isolée des deuxième et troisième voies 110B et 110C. Il s'agit de la position de grande cylindrée. Dans la deuxième position stable 111B, les première et deuxième voies 110A et 110B sont reliées entre elles et au conduit 124, tandis que la voie 110C est isolée desdites première et deuxième voies, ce qui correspond à la petite cylindrée. Le schéma de la figure 2 montre le sélecteur dans sa position intermédiaire instable 111C, dans laquelle les voies 110B et 110C communiquent entre elles de manière sensiblement libre, et communiquent avec la première voie 110A par l'intermédiaire d'une restriction.

Le circuit de la figure 2 est un circuit fermé ce qui, lors de l'augmentation de pression dans le conduit de refoulement liée au passage de la petite cylindrée à la grande cylindrée, permet de transmettre une partie de l'énergie de freinage à la pompe.

Le moteur représenté sur la figure 2 peut également être alimenté par un circuit ouvert (non représenté) avec les mêmes conditions de fonctionnement à condition que le refoulement du moteur comporte un dispositif de contrôle du débit.

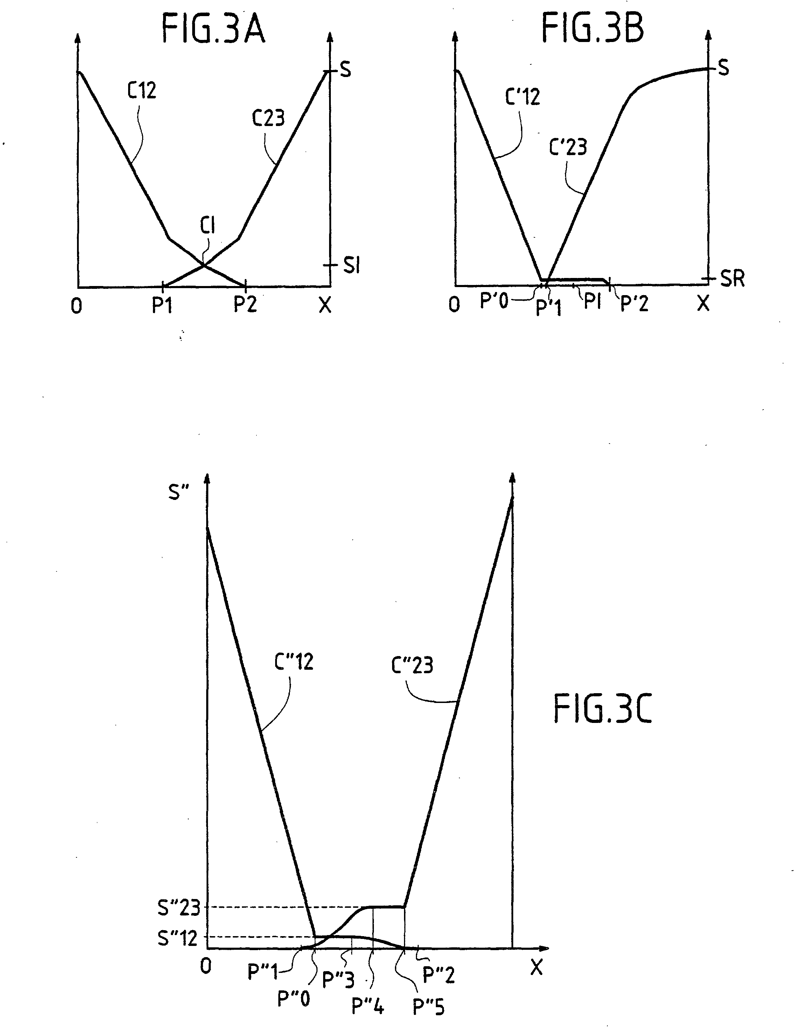

On décrit maintenant la figure 3A qui montre, pour un sélecteur classique, l'évolution de la section de passage entre les première et deuxième voies de communication d'une part (courbe C12) et l'évolution de la section de passage entre les deuxième et troisième voies de communication d'autre part (courbe C23), lors d'un déplacement du sélecteur de sa position de petite cylindrée à sa position de grande cylindrée.

En position 0 du sélecteur, la section de passage entre les première et deuxième voies est maximale, tandis que la section de passage entre les deuxième et troisième voies est nulle.

Lors du déplacement du tiroir vers sa position X de grande cylindrée, la section de passage entre les première et deuxième voies diminue continûment jusqu'à ce que le tiroir atteigne une position P1, à partir de laquelle la courbe C12 s'infléchit légèrement et à partir de laquelle la section de passage entre les deuxième et troisième voies commence à s'ouvrir. La section de passage entre les première et deuxième voies continue de diminuer jusqu'à ce que le sélecteur atteigne une position P2 pour laquelle cette section de passage est nulle.

Dans le même temps, la section de passage entre les deuxième et troisième voies augmente. A partir du point P2 la courbe C23 se redresse. On voit ainsi qu'entre les points P1 et P2, les sections de passage entre les première et deuxième voies et entre les deuxième et troisième voies sont simultanément non nulles, de sorte que les trois voies de communication sont reliées entre elles. Lorsqu'aucune précaution particulière n'est prise, le moteur fonctionne alors en roue libre, comme indiqué précédemment.

Les courbes C12 et C23 sont globalement symétriques de part et d'autre de leur point d'intersection Cl. Par exemple, les valeurs maximales S des sections de passage entre les première et deuxième voies et entre les deuxième et troisième voies sont de l'ordre de 200 mm². La section de passage SI correspondant au point C1 est par exemple de l'ordre de 20 mm². Le déplacement X correspond par exemple à une course de 12 mm pour le tiroir 42 du sélecteur de la figure 1.

La figure 3B montre des courbes analogues à celles de la figure 3A, mais pour un dispositif de sélection conforme à l'invention, pour une variante dans laquelle seul l'un des passages (en l'espèce le passage entre les première et deuxième voies) est restreint pendant la phase intermédiaire, tandis que la section de l'autre passage est sensiblement libre. Ainsi, les courbes C'12 et C'23 montrent respectivement les variations de section des passages entre les voies 110A et 110B d'une part et entre les voies 110B et 110C d'autre part, lors d'un déplacement du sélecteur de sa position de petite cylindrée 111B (position 0 sur la figure 3B) à sa position de grande cylindrée 111A (position X).

Au cours de ce déplacement, la section de passage entre les voies 110A et 110B varie d'abord entre une section maximale S et une section de restriction SR selon une fonction sensiblement linéaire du déplacement du sélecteur, jusqu'à un point P'0 de ce déplacement. Ensuite, alors que le sélecteur continue de se déplacer, la section de passage entre les voies 110A et 110B reste sensiblement constante et est fixée à la valeur SR jusqu'à ce qu'elle s'annule au point P'2.

Durant toute la première phase du déplacement du sélecteur, la section entre les deuxième et troisième voies 110B et 110C reste nulle et elle ne commence à s'ouvrir qu'en un point P'1 situé après le point P'0, c'est-à-dire que le passage entre les voies 110B et 110C ne s'ouvre qu'alors que la section de passage entre les voies 110A et 110B est déjà la valeur SR. A partir de ce point P'1, la section de passage entre les voies 110B et 110C croit rapidement, d'abord selon une phase de croissance sensiblement linéaire en fonction du déplacement, puis selon une courbe moins pentue. Ainsi, au point P'2 auquel s'annule la section de passage entre les voies 110A et 110B, la section de passage entre les voies 110B et 110C a déjà pratiquement atteint sa valeur maximale S.

Par exemple, la section S est de l'ordre de 200 mm², tandis que la section SR est seulement de l'ordre de 3 mm². Les points P'1 et P'2 correspondent respectivement à la première et à la deuxième position intermédiaire du tiroir du sélecteur lors de la phase intermédiaire. Comme on l'a indiqué précédemment, la section de passage entre les première et deuxième voies reste pratiquement constante (SR) pendant une majeure partie de la course de déplacement du tiroir entre ses première et deuxième positions intermédiaires, sauf immédiatement avant le point P'2.

La figure 3C montre des courbes analogues à celles de la figure 3B, pour un autre dispositif de sélection conforme à l'invention, selon une variante dans laquelle le passage entre les premières et deuxième voies et le passage entre les deuxième et troisième voies sont tous les deux restreints durant la phase intermédiaire, mais à des valeurs différentes.

La courbe C"12 montre l'évolution de la section du passage entre les première et deuxième voies, tandis que la courbe C"23 montre l'évolution de la section du passage entre les deuxième et troisième voies, lors d'un déplacement du tiroir. Par exemple, la position 0 du tiroir correspond à la petite cylindrée, tandis que sa position X correspond à la grande cylindrée.

Lors du déplacement du tiroir de sa position 0 à sa position X, la section du passage entre les première et deuxième voies varie tout abord rapidement jusqu'à atteindre une section S"12, pour une position P"0 du tiroir. Lorsque le tiroir continue de se déplacer vers sa position X à partir de la position P"0, la section varie faiblement, et elle reste par exemple sensiblement constante entre la position P"0 et une position P"3 avant de décroître encore pour devenir nulle à une position P"2 du tiroir.

Lors du même déplacement, la section du passage entre les deuxième et troisième voies reste nulle tant que la section du passage entre les première et deuxième voies reste relativement importante, c'est-à-dire sur au moins une majeure partie de la course du déplacement du tiroir entre sa position 0 et la position P"0. La section du passage entre les deuxième et troisième voies commence à s'ouvrir pour une position P"1 du tiroir qui est voisine de sa position P"0.

Lorsque le tiroir se déplace au-delà de cette position P"1, la section du passage entre les deuxième et troisième voies augmente jusqu'à atteindre une valeur de section S"23 pour une position P"4 du tiroir. Elle ne commence à croître fortement qu'à partir d'une position P"5 du tiroir, pour laquelle la section du passage entre les première et deuxième voies est pratiquement nulle, c'est-à-dire que la position P"5 est voisine de la position P"2, légèrement avant ou légèrement après. Dans l'exemple représenté, entre les positions P"4 et P"5, la section du passage entre les deuxième et troisième voies reste sensiblement constante, à la valeur S"23.

Par exemple, les sections maximales S" de chacun des deux passages sont de l'ordre de 600 mm², tandis que les sections S"23 et S"12 sont respectivement de l'ordre de 50 mm² et de 15 mm².

Lors du déplacement du tiroir entre sa position 0 et sa position X, une phase intermédiaire est entretenue entre les positions P"0 et P"5. Elle peut intervenir dans un seul sens de déplacement ou dans les deux sens, selon que les moyens de commande du déplacement du tiroir le ralentissent entre les positions P"0 et P"5, dans un sens ou dans les deux.

La ou les phases intermédiaires comportent des plages sur lesquelles les sections restreintes des passages restent sensiblement constantes, respectivement aux valeurs S"12 et S"23.

Les sections S"12 et S"23 sont adaptées aux débits passant par ces sections dans les différentes phases de fonctionnement, soit pour le passage de petite cylindrée en grande cylindrée, soit pour le passage de grande cylindrée en petite cylindrée. Les pertes de charge alors générées dans ces conditions correspondent à des décélérations ou accélérations réglées pour la sécurité et le confort de conduite. Par exemple, dans le cas représenté, le débit de fluide dans la section S"12 lors du passage de la petite cylindrée vers la grande cylindrée pour une vitesse donnée du véhicule est inférieur au débit passant par la section S"23 lors du passage de la grande cylindrée vers la petite cylindrée, à la même vitesse.

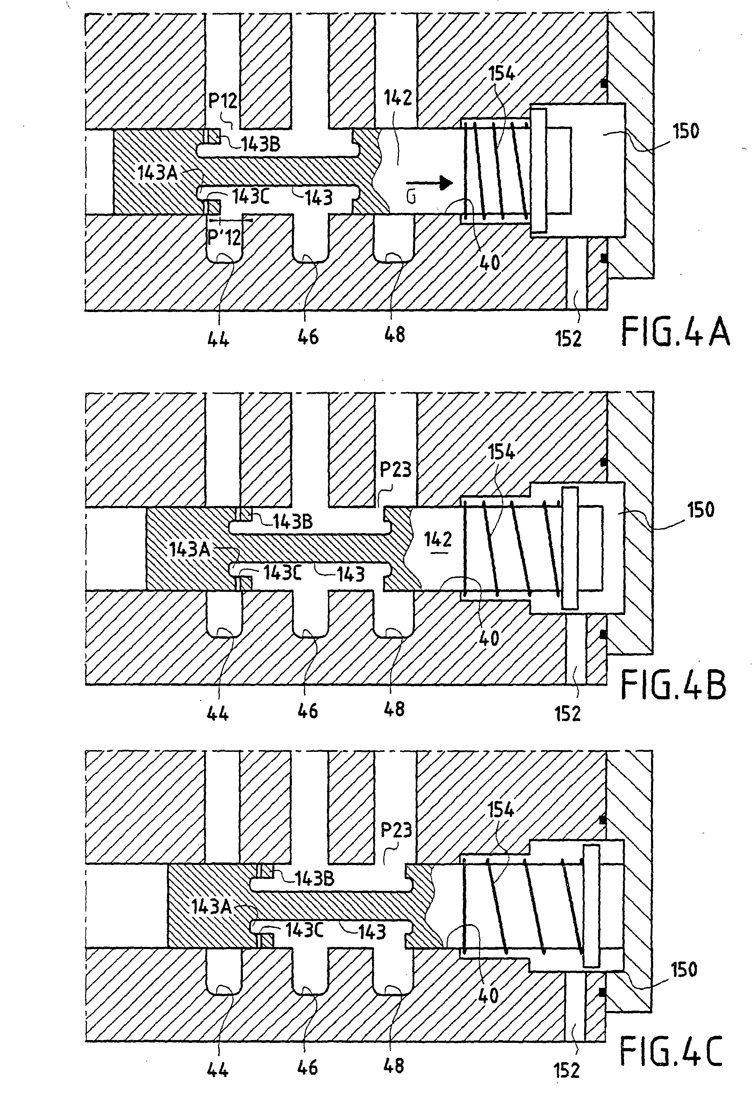

Sur les figures 4A à 4C, qui montrent le dispositif de sélection de cylindrée selon une variante de l'invention, l'alésage 40 est sensiblement le même que celui du dispositif de sélection de la figure 1, tandis que le tiroir 142 diffère du tiroir 42. La figure 4A montre ce tiroir dans une position stable, par exemple de petite cylindrée et l'on constate que les première et deuxième voies de communication 44 et 46 sont reliées entre elles, tandis que la voie 48 en est isolée. A l'inverse, la figure 4C montre la position du tiroir 142 correspondant à l'autre position stable, par exemple de grande cylindrée.

En effet, sur la figure 4A, la gorge 143 du tiroir est en regard des deux gorges 44 et 46, tandis que cette gorge 143 est en regard des deux gorges 46 et 48 sur la figure 4C. Dans les situations des figures 4A et 4C, les mises en communication réalisées à l'aide des moyens de sélection constitués par la gorge 143 et la paroi de l'alésage 40 sont sensiblement libres et exemptes de restriction. Sur la figure 4A, les première et deuxième voies de communication communiquent librement entre elles par un passage P12, tandis que sur la figure 4C, les deuxième et troisième voies communiquent librement par un passage P23.

L'extrémité 143A de la gorge 143 qui est située du côté de la première voie de communication 44 présente une configuration particulière. En effet, cette extrémité est formée sous un rebord annulaire 143B de la paroi cylindrique du tiroir 142, rebord qui est pourvu de perçages de petit diamètre 143C formant des restrictions.

Lorsque, à partir de sa position de la figure 4A, le tiroir 142 est déplacé vers sa position de la figure 4C dans le sens de la flèche G, la section du passage P12 diminue puis s'annule comme illustré par la courbe C'12 de la figure 3B, tandis que la section de passage P23 devient non nulle et augmente comme illustré par la courbe C'23.

La figure 4B montre la situation intermédiaire correspondant globalement à la position PI de la figure 3B, sur laquelle le passage P23 est ouvert et permet la circulation du fluide entre les gorges 46 et 48 avec un débit relativement important et une perte de charge faible, tandis que le passage P12 est réduit aux restrictions 143C. Ces restrictions occasionnent donc une perte de charge entre la voie 44 d'une part et les voies 46 et 48 d'autre part, ce qui, comme on l'a indiqué précédemment, permet le freinage "en douceur" du moteur pour passer de sa vitesse rapide de petite cylindrée à sa vitesse lente de grande cylindrée.

Si l'on se reporte à la figure 4A, on constate que le passage P12 entre les première et deuxième voies comporte une première partie P'12 qui, sur cette figure, est délimitée entre l'extrémité du rebord 143B de la gorge 143 et la face de la gorge 44 qui est située axialement en regard. Le passage P12 comporte également une deuxième partie constituée par les perçages 143C du rebord 143B qui forment des restrictions. Dans la deuxième position du tiroir représentée sur la figure 4A, la première partie P'12 permet une communication sensiblement libre entre les voies 44 et 46. Lors du déplacement du tiroir vers sa première position, cette première partie P'12 se ferme avant que ne s'ouvre le passage P23 entre les deuxième et troisième voies. Dès lors, seuls les perçages 143C permettent la communication restreinte entre les première et deuxième voies, ceci pendant la phase intermédiaire.

Si l'autre extrémité de la gorge 143 comportait des restrictions, analogues aux perçages 143C mais de section totale différente, alors la situation lors que déplacement du tiroir serait conforme à la figure 3C.

Sur les figures 4A à 4C, on a représenté schématiquement les moyens de commande du déplacement du tiroir 142. Ces moyens schématiques comprennent une chambre de commande 150 ménagée à une extrémité du tiroir et susceptible d'être alimentée en fluide par un conduit 152 pour placer le tiroir dans sa deuxième position de la figure 4A, à l'encontre des efforts de réaction exercés par un ressort ou analogue 154. Lorsque la chambre 150 est vidangée par le conduit 152, le ressort 154 rappelle le tiroir élastiquement dans sa première position représentée à la figure 4C.

Il est possible de faire varier la vitesse de déplacement du tiroir de sélection en faisant varier la pression dans la chambre de commande 150.

En référence aux figures 5A à 5C, on décrit maintenant une variante qui permet de déplacer le tiroir en deux temps.

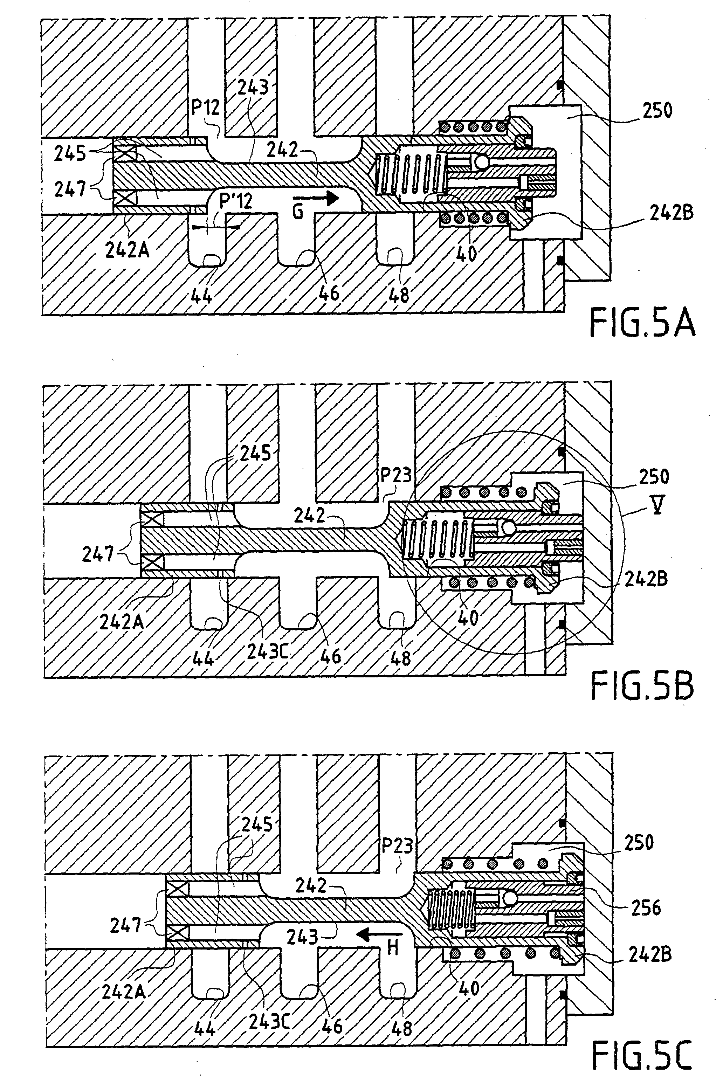

Le tiroir 242 du dispositif de sélection de la cylindrée de ces figures est disposé dans l'alésage 40, qui comprend les gorges 44, 46 et 48 constituant les première, deuxième et troisième voies de communication. La paroi cylindrique du tiroir 242 présente une gorge 243 qui, dans la position de petite cylindrée représentée à la figure 5A, met en communication sensiblement libre les première et deuxième voies 44 et 46, et qui, dans la position de grande cylindrée représentée à la figure 5C, met en communication les deuxième et troisième voies 46 et 48. Les passages P12 et P23 sont donc respectivement ouverts sur les figures 5A et 5C.

Le tiroir 242 présente également des restrictions qui permettent un passage restreint entre les première et deuxième voies dans la position intermédiaire représentée sur la figure 5B. Ces restrictions sont formées du côté de la gorge 243 qui est voisin de la gorge 44. Ainsi, des canaux longitudinaux 245 sont pratiqués dans le tiroir et s'étendent entre la gorge 243 et l'extrémité libre 242A du tiroir située du côté de la gorge 44. A cette extrémité libre, ces canaux sont bouchés par des bouchons 247. Les restrictions 243C sont pratiquées par des perçages radiaux ménagés dans la paroi axiale du tiroir, entre la gorge 243 et l'extrémité 242A de ce tiroir, et reliées aux canaux 245 précédemment évoqués. La gorge 243 et les restrictions 243C du tiroir 242 constituent une variante pour la gorge 143 et les restrictions 143C du tiroir 142, intéressante du point de vue de sa simplicité de fabrication.

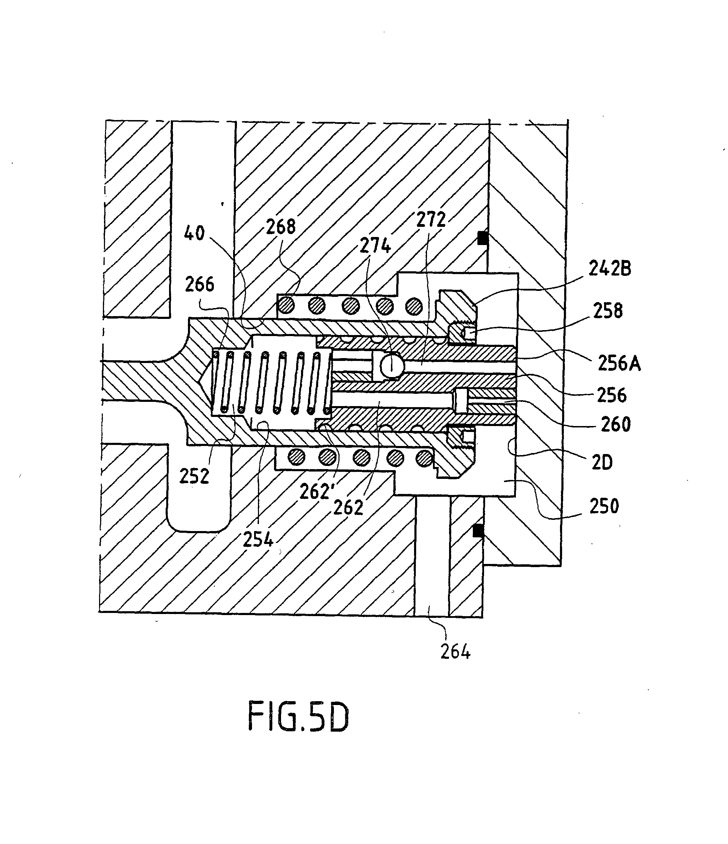

On décrit maintenant, en référence en particulier à la figure 5D, les moyens de commande du déplacement du tiroir 242, qui permettent son déplacement en deux temps. Ces moyens de commande sont situés à l'extrémité 242B du tiroir opposée à son extrémité 242A. Ils comprennent une première chambre de commande 250 formée dans l'alésage 40 et une deuxième chambre de commande 252 formée dans une cavité (trou borgne) ménagée à l'extrémité 242B du tiroir. La chambre 252 est séparée de la chambre 250 par un piston de commande 256 monté coulissant dans la cavité 254. La première chambre de commande 250 est susceptible d'être raccordée à des premiers moyens de pilotage pour permettre le déplacement de l'ensemble constitué par le tiroir 242 et le piston de commande 256, à partir de la position de petite cylindrée représentée à la figure 5A, dans une première étape de déplacement rapide à l'issue de laquelle le piston de commande 256 se trouve dans une position extrême, qui est celle que montrent les figures 5B et 5D. L'extrémité libre 256A du piston opposée à l'extrémité 242A du tiroir est alors en butée contre la paroi de l'alésage 40, paroi formée en l'espèce sur la face interne du couvercle 2D du carter.

La deuxième chambre de commande 252 est, quant à elle, susceptible d'être raccordée à des deuxièmes moyens de pilotage pour permettre le déplacement du tiroir par rapport au piston de commande dans une deuxième étape de déplacement lent.

Plus précisément, les premiers moyens de commande du déplacement comprennent un conduit de pilotage 264 en communication avec la chambre 250 et permettant l'alimentation ou la vidange de cette dernière, et les deuxièmes moyens de pilotage comprennent un passage de pilotage 262 susceptible de faire communiquer les première et deuxième chambres 250 et 252. Comme indiqué en trait plein sur la figure 5D, ce passage peut être réalisé par un perçage traversant du piston 256, dans lequel est disposée la restriction 260. Comme indiqué en trait fin sur la figure 5D à titre de variante, ce passage peut également être réalisé par une ou plusieurs rainures 262' de faible profondeur formées à la surface (face axiale) du piston de commande 256. La profondeur de cette ou de ces rainures peut être déterminée de telle sorte que ladite ou lesdites rainures constituent directement la restriction précédemment évoquée. Il peut s'agir d'une ou plusieurs rainures axiales ou encore, par exemple, d'une ou plusieurs rainures hélicoïdales comme représenté.

On s'intéresse tout abord au déplacement du tiroir depuis sa deuxième position représentée à la figure 5A (par exemple celle qui correspond à la petite cylindrée) jusqu'à sa première position représentée à la figure 5C (par exemple celle qui correspond à la grande cylindrée). On voit que sur la figure 5A, le volume de la chambre 250 est maximum, de sorte que le tiroir est repoussé dans le sens de la flèche H. Sur la figure 5A, le volume de la chambre 252 est également maximal et on voit que le piston de commande 256 est repoussé de manière à venir en butée contre un écrou de butée 258 solidaire de l'extrémité 242B du tiroir.

A partir de cette situation, pour commander le déplacement du tiroir, on vidange la chambre 250 par le conduit 264. Cette vidange permet effectivement le déplacement du tiroir dans le sens de la flèche G, jusqu'à ce que l'extrémité libre 256A du piston 256 vienne en butée contre le couvercle 2D. Cette première étape de déplacement est dénommé étape de déplacement rapide car elle est seulement liée à la vidange de la chambre 250 qui peut être réalisée rapidement par le conduit 264. A l'issue de cette étape de déplacement rapide, le tiroir se trouve dans sa position intermédiaire et l'on constate sur la figure 5B que, dans cette situation, les deuxième et troisième gorges 46 et 48 communiquent entre elles par le passage P23 dont la section est déjà relativement importante, tandis que la gorge 44 communique avec les gorges 46 et 48 seulement par les restrictions 243C.

A partir de cette situation intermédiaire, pour continuer de déplacer le tiroir, il est nécessaire que la deuxième chambre de commande 252 soit vidangée. La circulation du fluide en dehors de cette chambre 252 est rendue possible par les deuxièmes moyens de pilotage précédemment évoqués, le fluide sortant de la chambre par le passage 262 muni de la restriction 260. Le débit de fluide de vidange de la chambre 252 est donc limité, de sorte que cette vidange prend un certain temps, fonction du diamètre de passage de la restriction 260 ou de la profondeur des rainures 262' précédemment évoquées. La deuxième phase de déplacement du tiroir est donc ralentie par rapport à la première.

Un ressort ou analogue 266 est disposé dans la chambre 252 et tend à repousser le piston 256 hors de cette chambre. Un ressort 268 est disposé dans la chambre 250 et coopère avec le tiroir 242 en ayant un effet antagoniste de celui de l'augmentation de volume de la chambre 250.

Le déplacement du tiroir 242 de sa première position (grande cylindrée) représentée à la figure 5C à sa deuxième position (petite cylindrée) représentée à la figure 5A s'effectue de la manière suivante.

Pour repousser le tiroir 242 dans le sens de la flèche H, vers sa deuxième position, on alimente la chambre 250 en fluide par le conduit 264. La chambre 252 communique avec la chambre 250 et est donc également alimentée en fluide de manière à tendre à repousser le piston 256 hors de la cavité 254. Le passage 262 ou les rainures 262' précédemment évoquées pouvant être insuffisants, du fait des restrictions qu'ils présentent, pour permettre une augmentation rapide du volume de la chambre 252, les deuxièmes moyens de pilotage comprennent un passage de commande inverse 272 équipé de moyens de clapet anti-retour 274 qui permettent seulement l'écoulement du fluide de pilotage entre les chambres 250 et 252 dans le sens commandant le déplacement du tiroir de sa première position vers sa deuxième position.

Les figures 5A à 5D illustrent donc des moyens hydrauliques de commande qui permettent de freiner le déplacement du tiroir seulement dans un sens de déplacement, dans lequel se produit une phase intermédiaire. En revanche, dans l'autre sens de déplacement, le déplacement est rapide. De plus, sur ces figures, on a montré un tiroir pour lequel, pendant la phase intermédiaire, seule la section du passage P12 entre les première et deuxième voies est restreinte, tandis que celle du passage P23 entre les deuxième et troisième voies est sensiblement libre. On pourrait bien entendu modifier la conformation du tiroir pour l'équiper aux deux extrémités de la gorge 243 de restrictions du type des restrictions 243C, ayant éventuellement des sections différentes. Ainsi, dans la phase intermédiaire, les deux passages auraient des sections restreintes.

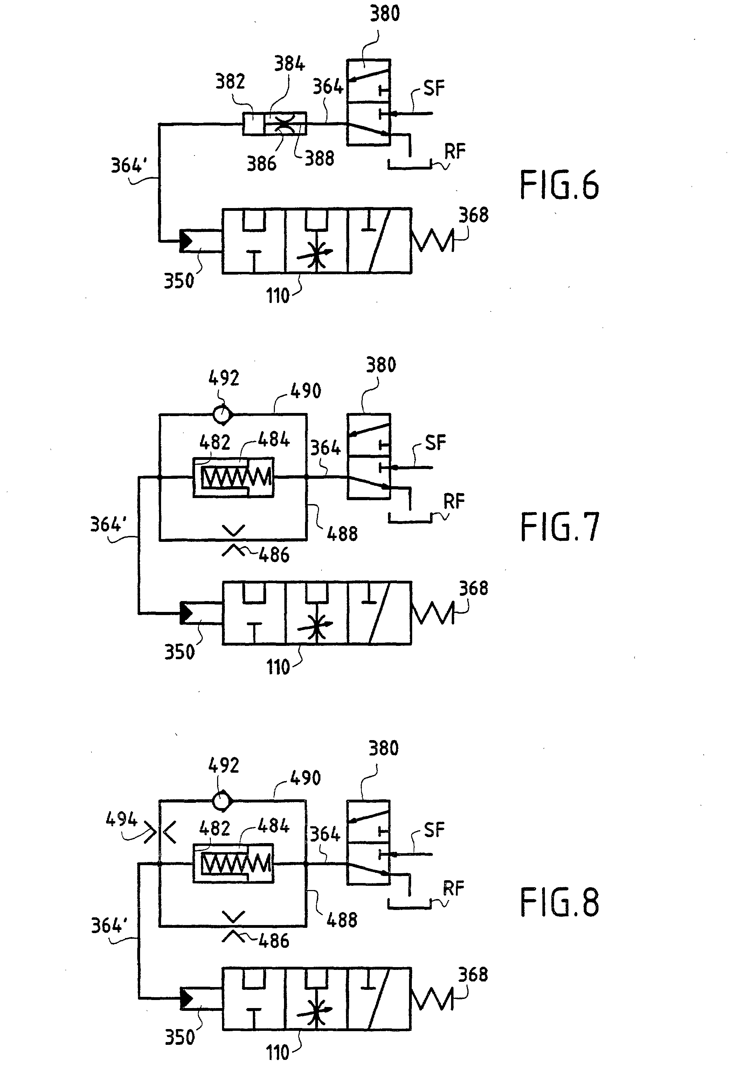

Les figures 6 à 10 illustrent schématiquement des variantes de moyens de commande du déplacement du tiroir du dispositif de sélection de la cylindrée conforme à l'invention.

A titre d'exemple, on considère sur ces figures que les première et deuxième positions du tiroir correspondent respectivement à la grande et à la petite cylindrée. La disposition pourrait toutefois être inverse.

Ainsi, on reconnaît sur la figure 6 le sélecteur 110 de la figure 2. Sur cette figure 6, on a désigné par la référence 350 une chambre de commande raccordée à un conduit de pilotage 364 et on a désigné par la référence 368 un ressort d'effet antagoniste à celui du remplissage de la chambre 350. Ces moyens de commande équipent par exemple le tiroir 142 des figures 4A à 4C, la chambre de commande 350 et le ressort 368 étant respectivement analogues à la chambre de commande 150 et au ressort 154. Par un sélecteur à deux positions 380, le conduit de pilotage 364 peut être raccordé à une source de fluide de sous pression SF, ou à un réservoir sans pression RF.

Dans la variante de la figure 6, les moyens de commande du déplacement du tiroir comprennent des moyens de dosage d'un volume de fluide de pilotage prévus pour permettre la circulation sensiblement libre dans le conduit de pilotage 364 d'un volume de fluide déterminé au moins dans un premier sens de déplacement correspondant à un déplacement du tiroir de sa deuxième position vers sa première position et des moyens pour ne permettre la circulation d'un volume supplémentaire de fluide dans ce conduit de pilotage 364 dans ce premier sens de circulation que par l'intermédiaire d'une première restriction.

Ainsi, sur la figure 6, le conduit de pilotage 364 comprend une chambre de dosage 382 dans laquelle est disposé un piston de dosage 384. Ce piston est représenté dans sa deuxième position, dans laquelle la chambre de pilotage 382 présente un volume maximum et le conduit de pilotage est raccordé au réservoir RF. A titre d'exemple, on a choisi de représenter sur les figures 6 à 9 la situation dans laquelle le tiroir du sélecteur 110 est commandé de sa deuxième position de petite cylindrée à sa première position de grande cylindrée par une vidange de la chambre 350. Ceci constitue une variante avantageuse, mais on doit comprendre que l'on pourrait prévoir des moyens analogues pour une commande inverse.

Sur la figure 6, le tiroir du sélecteur 110 occupe sa première position de grande cylindrée lorsque, la conduite de pilotage 364 étant raccordée à la source de fluide SF par le sélecteur 380, le volume de la chambre 350 est maximum tandis que le piston de dosage 384 occupe sa première position dans laquelle la chambre de dosage 382 présente un volume minimum. A partir de cette situation, lorsqu'on raccorde le conduit de pilotage 364 au réservoir sans pression RF, le piston 384 est libre de se déplacer vers la deuxième position qu'il occupe sur la figure 6 et la chambre 350 se vidange rapidement d'un premier volume de vidange correspondant au volume de la chambre de dosage 382 qui se remplit sensiblement librement. A partir de cette situation, une évacuation d'un volume supplémentaire de fluide de la chambre 350 n'est possible que par la restriction 386 que présente une conduite d'évacuation 388 pratiquée, dans l'exemple représenté, dans le piston 384. Ceci permet de réaliser la deuxième étape de déplacement lent, dont la vitesse est fonction de la section de passage de la restriction 386.

Inversement, lorsque le tiroir du sélecteur 110 est commandé de sa première position de grande cylindrée à sa deuxième position de petite cylindrée, les moyens en place peuvent également permettre d'obtenir la même séquence de déplacement rapide suivi d'un déplacement lent du tiroir.

Sur la figure 7, la conduite d'évacuation est réalisée par une dérivation 488, équipée d'une restriction 486 et disposée en dérivation de la chambre 482 sur le conduit de pilotage 364. La commande du déplacement dans le sens du déplacement du tiroir du sélecteur 110 de sa deuxième position de petite cylindrée à sa première position de grande cylindrée est analogue à celle de la figure 6. Pour commander le déplacement de ce tiroir dans l'autre sens, le conduit 364 est raccordé à la source de fluide SF par le sélecteur 380, ce qui vient repousser le piston 484 de manière à réduire le volume de la chambre 482. Un volume de fluide correspondant au volume de cette chambre de dosage 482 est donc injecté dans la chambre de commande 350.

A partir de cette situation, l'alimentation en fluide de la chambre 350 peut continuer par la conduite 488 et sa restriction 486. Toutefois, on peut souhaiter faire en sorte que la vitesse de remplissage de la chambre 350 ne soit pas limitée par cette restriction 486, et l'on a prévu sur la figure 7 une conduite de dérivation 490 équipée de moyens de clapet anti-retour permettant seulement la circulation du fluide de pilotage dans cette conduite 490 dans un deuxième sens de circulation correspondant au déplacement du tiroir du sélecteur 110 de sa première position vers sa deuxième position.

La variante de la figure 8 est analogue à celle de la figure 7, à ceci près que l'on a disposé sur la conduite de dérivation 490 une deuxième restriction 494. Ainsi, la vitesse de déplacement du tiroir du sélecteur 110 de sa première position vers sa deuxième position est définie par l'alimentation en fluide de la conduite 364' par l'intermédiaire des restrictions 486 et 494. On peut donc également dans ce cas prévoir une première étape de déplacement rapide liée à la vidange de la chambre 482 et une deuxième étape de déplacement lent, pour le passage de grande cylindrée en petite cylindrée.

Ainsi, les moyens de commande du déplacement du tiroir du dispositif selon une variante de l'invention comprennent en outre des moyens de dosage inverses (constitués, dans l'exemple de la figure 8, par la chambre de dosage 482) prévus pour permettre la circulation sensiblement libre dans le conduit de pilotage d'un volume de fluide déterminé dans un deuxième sens de déplacement correspondant à un déplacement de tiroir de sa première position vers sa deuxième position et des moyens pour ne permettre la circulation d'un volume supplémentaire de fluide dans le conduit de pilotage dans le deuxième sens de circulation que par l'intermédiaire d'une deuxième restriction. Dans l'exemple de la figure 8, ces moyens sont constitués par le clapet anti-retour 492 et les restrictions 486 et 494.

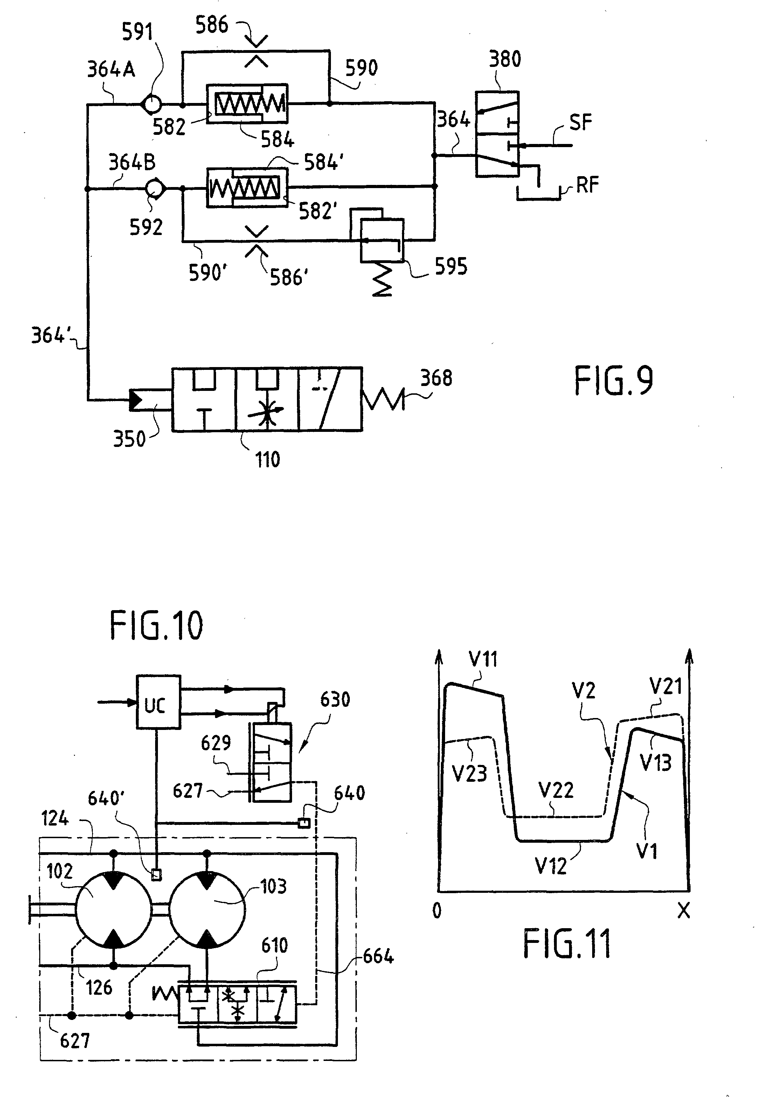

La figure 9 illustre une variante présentant les mêmes possibilités. En effet, le conduit de pilotage 364 présente une première chambre de dosage 582 dans laquelle est disposé un premier piston de dosage 584 susceptible, sous l'effet d'un fluide de pilotage, d'être déplacé entre une première et une deuxième position pour provoquer la circulation, dans un premier tronçon 364A du conduit de pilotage qui s'étend entre la première chambre de dosage 582 et la chambre de commande 350, d'un volume de fluide correspondant à la course de ce premier piston de dosage 584. Lorsque ce premier piston 584 occupe sa deuxième position de pilotage, la circulation d'un volume supplémentaire de fluide dans le premier tronçon 364A n'est possible, dans le premier sens de circulation, que par l'intermédiaire de la première restriction 586 qui est disposée sur ce premier tronçon 364A.

Plus précisément, dans l'exemple représenté, la restriction 586 est disposée sur une dérivation 590 de la chambre 582. Le premier tronçon 364A du conduit de pilotage est équipé de premiers moyens de clapet anti-retour 591 ne permettant la circulation du fluide de pilotage dans ce tronçon 364A que dans le premier sens de circulation.

En outre, le conduit de pilotage 364 comprend une deuxième chambre de dosage 582' dans laquelle est disposé un deuxième piston de dosage 584' susceptible, sous l'effet d'un fluide de pilotage, d'être déplacé entre une première et une deuxième position pour provoquer la circulation, dans une deuxième tronçon 364B du conduit de pilotage s'étendant entre la deuxième chambre de pilotage 582' et la chambre de commande 350, d'un volume de fluide correspondant à la course de ce deuxième piston de dosage 584'. Lorsque ce deuxième piston occupe sa deuxième position de pilotage, la circulation d'un volume supplémentaire de fluide dans le deuxième tronçon 364B n'est possible, dans le deuxième sens de circulation, que par l'intermédiaire d'une deuxième restriction 586' qui est disposée sur ce deuxième tronçon 364B. Plus précisément, dans l'exemple représenté, la deuxième restriction 586' est disposée sur une conduite de dérivation 590' de la chambre 582'. Le deuxième tronçon 364B du conduit de pilotage est équipé de deuxième moyens de clapet anti-retour 592 qui ne permettent la circulation du fluide pilotage que dans le deuxième sens de circulation.

Ainsi, le volume de la première chambre de pilotage 582 détermine une première étape de déplacement rapide lors du déplacement du tiroir de sa deuxième position à sa première position tandis que la section de passage de la première restriction 586 détermine la deuxième étape de déplacement lent de ce tiroir dans le même sens. A l'inverse, le volume de la deuxième chambre de pilotage 582' détermine une première étape de déplacement rapide lors du déplacement du tiroir du sélecteur de sa première position vers sa deuxième position, tandis que la section de passage de la deuxième restriction 586' détermine la deuxième étape de déplacement lent dans le même sens de déplacement.

Comme on le voit sur la figure 9, les moyens de commande du déplacement du tiroir du sélecteur 110 comprennent en outre avantageusement les moyens de réduction de pression 595 destinés à limiter la perte de charge de part et d'autre de la deuxième restriction 586'. Les moyens analogues pourraient être disposés sur la conduite de dérivation 490 de la figure 8.

Chacun des dispositifs de commande des figures 6 à 9 peut être utilisé pour commander simultanément plusieurs moteurs. Dans ce cas, il suffit d'adapter le volume des chambres de dosage.

Le sélecteur 610 de la figure 10 diffère du sélecteur 110 des figures 6 à 9 et de la figure 2 par le fait que, dans la position intermédiaire centrale, il présente une restriction sur chacun des deux passages entre, d'une part, la première et la deuxième voie et, d'autre part, la deuxième et la troisième voie. Ces deux restrictions sont de préférence différentes. Bien entendu, le sélecteur 110 des figures 6 à 9 pourrait être remplacé par ce sélecteur 610. Comme sur la figure 2, on a indiqué sur la figure 10 les conduits principaux 124 et 126, pour les deux cylindrés 102 et 103 du moteur. On a également indiqué un conduit de retour de fuite 627. Les trois voies du sélecteur 610 sont analogues à celles du sélecteur 110.

Sur la figure 10, le déplacement du tiroir du sélecteur 610 est commandé à l'aide de moyens de commande électronique. Dans l'exemple représenté, ces moyens de commande comprennent une unité de contrôle UC et, en fonction d'informations de commande qu'elle reçoit, ils commandent une électrovalve 630. Le sélecteur 610 est relié à cette électrovalve par une conduite de pilotage hydraulique 664. Le déplacement de l'électrovalve est progressif, entre deux positions extrêmes.

Dans la première position extrême représentée sur la figure 10, la conduite de pilotage 664 est mise en communication avec le conduit de retour de fuite 627. Par conséquent, le sélecteur 610 occupe, sous l'effet de moyens de rappel élastiques, sa première position dans laquelle la deuxième et la troisième voie communiquent librement en étant isolées de la première. Lorsque l'électrovalve 630 est déplacée vers son autre position extrême, la conduite de pilotage 664 est progressivement raccordée à un conduit de pression auxiliaire 629, par exemple un conduit alimenté par la pompe de gavage du circuit telle que la pompe 101 de la figure 2. Dans ce cas, l'alimentation en fluide de la conduite de pilotage 664 déplace le sélecteur vers sa deuxième position.

L'unité de contrôle UC contrôle le déplacement de l'électrovalve 630 en fonction d'informations qu'elle reçoit, par exemple par des capteurs 640 et 640'. Par exemple, le capteur 640 peut lui fournir une information relative à la pression dans la conduite de pilotage 664. Par des données préalablement enregistrées en mémoire, l'unité de contrôle UC connaît, en fonction de cette pression, la position du sélecteur 610. Elle peut ainsi commander le déplacement de ce sélecteur de manière asservie en fonction de la pression mesurée par le capteur 640. En fonction de données pré-enregistrées, l'unité de contrôle peut ainsi maintenir, en contrôlant la pression dans la conduite 664, le sélecteur 610 sur une position correspondant à la phase intermédiaire, ceci pendant une durée prédéterminée.

L'unité de contrôle UC peut également commander l'électrovalve 630 en fonction d'autres paramètres, tels que ceux qui sont délivrés par le capteur 640' relatifs, par exemple, à la pression, à la température ou au débit de fluide dans un conduit du moteur.

L'unité de contrôle UC peut aussi commander l'électrovalve 630 selon une loi programmée tenant compte des caractéristiques du véhicule.

De manière générale, les moyens de commande électronique du tiroir représentés à titre d'exemple sur la figure 10 comprennent des moyens de détection qui, lors d'un déplacement du tiroir au cours duquel l'un des passages entre les première et deuxième voies et entre les deuxième et troisième voies est destiné à être restreint durant la phase intermédiaire, détectent une information permettant de déterminer au moins l'un des paramètres constitués par la position du tiroir du sélecteur, la vitesse de déplacement de ce tiroir, la perte de charge à travers ledit passage destiné à être restreint, le débit de fluide à travers ce passage, la pression ou le débit de fluide dans un conduit du moteur hydraulique, la température du fluide dans un conduit du moteur hydraulique ou encore la vitesse de sortie de ce moteur. Les moyens de commande électronique comportent également des moyens de contrôle tels que l'unité de contrôle UC, qui sont aptes à influencer la vitesse de déplacement du tiroir de sélecteur en fonction de l'information détectée.

Les paramètres cités ci-dessus à titre non exhaustif permettent, en fonction d'une programmation adéquate du microprocesseur ou d'abaques de données pré-enregistrées, de connaître l'état du système et de commander le déplacement du sélecteur en fonction de cet état. Par - exemple, lorsqu'un état correspondant au début de la phase intermédiaire est détecté, l'unité de contrôle pourra ralentir le déplacement du tiroir en cessant d'alimenter la conduite 664, pour maintenir dans cette dernière une pression sensiblement constante. Lorsque cette phase de quasi-arrêt du déplacement du tiroir correspondant à la phase intermédiaire aura eu une durée suffisante au regard de paramètres de fonctionnement préenregistrés, l'unité de contrôle pourra commander à nouveau le déplacement de l'électrovalve 630 pour augmenter ou diminuer la pression dans la conduite 664, de manière à déplacer le sélecteur davantage dans l'un ou l'autre sens.

La figure 10 ne représente qu'un exemple de moyens de commande faisant appel à des moyens électroniques.

On peut également prévoir une commande électronique ou électromécanique directe, par exemple un moteur pas-à-pas avec un système de déplacement tel qu'un système vis-écrou, agissant directement sur le tiroir du sélecteur. Il peut également s'agir d'un servolimiteur ou d'une servovalve. De manière générale, un système d'asservissement utilisant un servomécanisme peut être prévu. Par exemple on peut utiliser un servoréducteur qui est un réducteur de pression commandé par des moyens tels que le noyau d'un électroaimant, lui-même commandé par une alimentation électrique en courant continu ou pulsé, en fonction de données d'asservissement.

On peut également utiliser un système de commande hydraulique en remplaçant, sur la figure 10, l'unité de contrôle UC et l'électrovalve 630 par tout type de système convenable de commande hydraulique progressive à pression contrôlée.

Comme indiqué précédemment, il est avantageux que le déplacement du tiroir de sélecteur comporte une phase de déplacement rapide, suivie par une phase de déplacement lent, éventuellement suivie elle-même par une nouvelle phase de déplacement rapide.

Le système décrit permet entre autre un positionnement du tiroir (à vitesse nulle) pendant un temps défini. Il permet également un déplacement à vitesse négative (recul).

Sur la figure 11, la courbe V1 montre, à titre indicatif, la variation de la vitesse de déplacement des tiroirs lors d'un déplacement dans un premier sens, par exemple de sa deuxième position vers sa première position. La courbe V2 montre l'évolution de la vitesse de déplacement des tiroirs lors d'un déplacement en sens inverse.

Dans les deux sens de déplacement, la vitesse croît très rapidement jusqu'à atteindre une valeur élevée, pour réaliser une première phase de déplacement rapide, comme le montrent les portions V11, respectivement V21 des courbes. Lorsque le tiroir parvient dans une position correspondant au début de la phase intermédiaire, la vitesse décroît rapidement pour être ramenée à une valeur plus faible, correspondant respectivement aux portions V12 et V22 des courbes. La vitesse reste à une valeur faible pendant le laps de temps que dure la phase intermédiaire, dans l'un ou l'autre sens de déplacement. A la fin de cette phase intermédiaire, la vitesse augmente à nouveau rapidement pour revenir à une valeur importante, correspondant respectivement aux portions V13 et V23 des courbes. Ainsi, lorsque la phase intermédiaire s'est suffisamment prolongée pour permettre une circulation suffisante du fluide pour éviter un effet de choc, le déplacement du tiroir redevient rapide pour éviter que la durée totale du changement de cylindrée ne soit trop importante. Dans l'exemple de la figure 11, une phase intermédiaire se produit dans chacun des deux sens de déplacement.

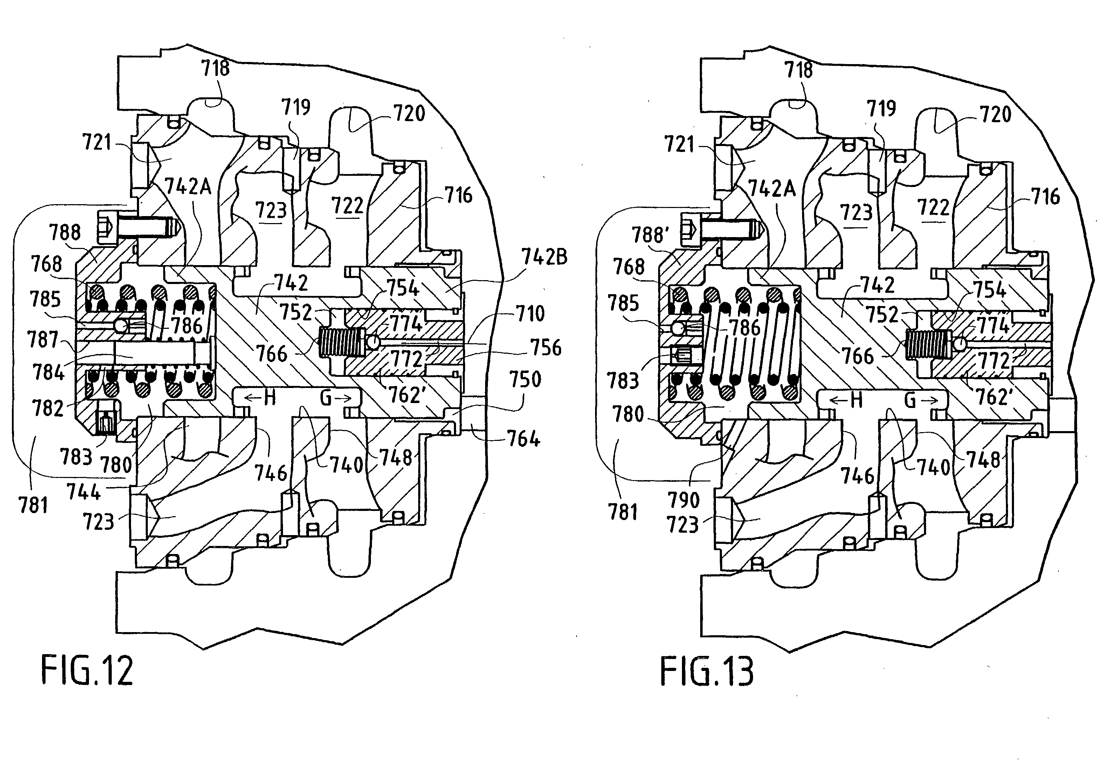

Les moyens de commande permettant d'obtenir une phase intermédiaire dans les deux sens de déplacement du tiroir du sélecteur peuvent être des moyens électroniques ou des moyens combinant l'électronique et l'hydraulique, du type précité. Il peut également s'agir de moyens hydrauliques tels que ceux que montre la figure 12.

L'alésage 740 du dispositif de sélection de la cylindrée dans lequel est disposé le tiroir 742 est, dans l'exemple représenté, disposé coaxialement avec l'axe 710 de rotation du bloc-cylindres, au centre du distributeur 716 du moteur. Dans cet exemple, cet alésage 740 comporte trois voies de communication, respectivement 744, 746 et 748.

La première voie 744 est reliée aux conduits de distribution du premier groupe, tels que le conduit 721 qui communiquent en permanence entre eux par la gorge 718. La troisième voie 748 est reliée aux conduits de distribution du troisième groupe, tels que le conduit 722, qui communiquent en permanence entre eux par une gorge 720. La deuxième voie de communication 746 communique en permanence avec les conduits de distribution du deuxième groupe, tels que le conduit 723 qui communiquent en permanence entre eux par des perçages 719.

Les moyens de commande hydrauliques qui sont représentés sur la figure 12 sont, pour des problèmes d'accessibilité, avantageusement disposés sur un tel sélecteur central. Toutefois, le même principe pourrait être adopté pour un sélecteur excentré, placé comme celui que montre la figure 1.

Les premiers moyens de commande hydraulique situés à la première extrémité 742B du tiroir, au-delà de la voie 748 sont globalement analogues à ceux des figures 5A à 5D.

En effet, une première chambre de commande 750 est ménagée entre l'extrémité 742B du tiroir et le fond de l'alésage 740. Cette chambre est raccordée à une conduite de pilotage 764. L'alimentation en fluide de la chambre 750 tend à déplacer le tiroir dans le sens de la flèche H, à l'encontre de l'effort de rappel exercé par les ressorts de rappel 768 disposés à l'autre extrémité 742A du tiroir.

La deuxième chambre de commande 752 est formée dans la cavité 754 de l'extrémité 742B du tiroir. Elle est séparée de la première chambre par un piston de commande 756 disposé dans la cavité 754. Les deuxièmes moyens de pilotage sont, comme dans la variante de la figure 5D, constitués par une rainure hélicoïdale 762'. Le ressort de rappel 766, le passage de commande inverse 772 et le clapet 774 sont respectivement analogues au ressort 266, au passage 272 et au clapet 274 de la figure 5D.

Comme dans le cas de la figure 5D, ces moyens de commande comprenant les deux chambres 750 et 752 permettent de commander, dans le sens de déplacement G, le déplacement du tiroir selon une étape de déplacement rapide suivie par une étape de déplacement lent.

Les moyens de commande servant à commander le déplacement du tiroir 742 avec une phase intermédiaire dans l'autre sens, selon la flèche H, comprennent une troisième chambre de commande 780 formée dans l'alésage 740, à l'autre extrémité 742A du tiroir. Cette chambre 780 est raccordée à une réserve de fluide 781 dans un sens de circulation de fluide entre la chambre 780 et la réserve 781 qui commande une étape de déplacement rapide et une étape de déplacement lent du tiroir.

Ces moyens de raccordement entre la chambre et la réserve comprennent une première partie de raccordement sensiblement libre 782 et une deuxième partie 783 équipée d'une restriction. Ils comprennent également des moyens d'obturation 784 qui permettent d'obturer la première partie 782 en fonction de ,la position du tiroir 742 de sorte que, dans cette situation d'obturation, la circulation de fluide entre la troisième chambre de commande 780 et la réserve de fluide 781 n'est autorisée, dans ledit sens de circulation de fluide, qu'à travers la restriction 783.

Dans l'exemple représenté, la réserve 781 est simplement constituée par l'espace intérieur du carter du moteur ménagé entre le bloc-cylindres et le distributeur, normalement rempli de fluide. Le sens de circulation dans lequel la troisième chambre commande le déplacement du tiroir est celui de la vidange de cette troisième chambre vers ledit espace 781.

En revanche, la chambre 780 peut être rapidement alimentée en fluide par un passage d'alimentation 785 qui grâce à un clapet 786, ne permet la circulation de fluide que dans le sens allant de l'espace 781 vers la chambre 780.

Les moyens d'obturation sont, dans l'exemple représenté, constitués par une tige 784 qui se déplace avec le tiroir 742 en coulissant dans un alésage 787 qui s'étend entre la chambre 780 et la réserve de fluide 781. La première partie de raccordement sensiblement libre est constituée par un ou plusieurs perçages 782 de la paroi de cet alésage, qui, tant qu'ils ne sont pas masqués par la tige 784, permettent une circulation de fluide sensiblement libre entre la chambre 780 et la réserve 781.

On comprend que lorsque, à partir de la situation de la figure 12, le tiroir 742 se déplace dans le sens H, la tige 784 vient masquer les perçages 782, de sorte que la vidange de la chambre 780 n'est plus permise que par les restrictions 783.

L'alésage 787, de même que le conduit 785 et que la restriction 783 sont ménagés dans un couvercle 788 qui est fixé au distributeur 716 pour fermer l'alésage du sélecteur 740 du côté de l'extrémité 742A du tiroir. De manière générale, les moyens de raccordement peuvent être ménagés dans un élément solidaire de l'alésage 740, et les moyens d'obturation peuvent comprendre une tige d'obturation qui se déplace avec le tiroir.

La figure 13 montre une variante de la figure 12, sur laquelle les moyens de commande situés à l'extrémité 742B du tiroir sont restés inchangés. A l'autre extrémité du tiroir, la chambre 780 est également restée inchangée, et le couvercle 788' comporte un passage de raccordement inverse 785 et un clapet anti-retour 786, permettant seulement la circulation de fluide dans le sens du remplissage de la chambre 780. De même, la restriction 783 est disposée dans le couvercle.

Cette fois, la première partie de raccordement sensiblement libre des moyens de raccordement est réalisée par un perçage 790 qui s'étend entre la chambre 780 et la réserve de fluide 781 et qui, lorsque le tiroir se déplace dans le sens H, peut être masqué par la paroi de l'extrémité 742A de ce tiroir, auquel cas la vidange de la chambre 780 n'est plus permise que par la restriction 783.

Aussi longtemps qu'il n'est pas masqué par la paroi du tiroir, le passage 790 permet donc une vidange sensiblement libre de la chambre. De plus, lorsqu'il est masqué par cette paroi du tiroir, il permet l'évacuation, vers la réserve 781, des éventuelles fuites se produisant entre la paroi du tiroir et celle de l'alésage 740. Ainsi lesdites fuites ne font pas monter en pression la chambre 780 et ne perturbent donc pas le fonctionnement, sans qu'il soit nécessaire d'ajouter une étanchéité entre la paroi de l'alésage 740 et la périphérie du tiroir. Pour cette raison, le perçage 790 peut également être prévu sur la variante de la figure 12, en complément des perçages 782.

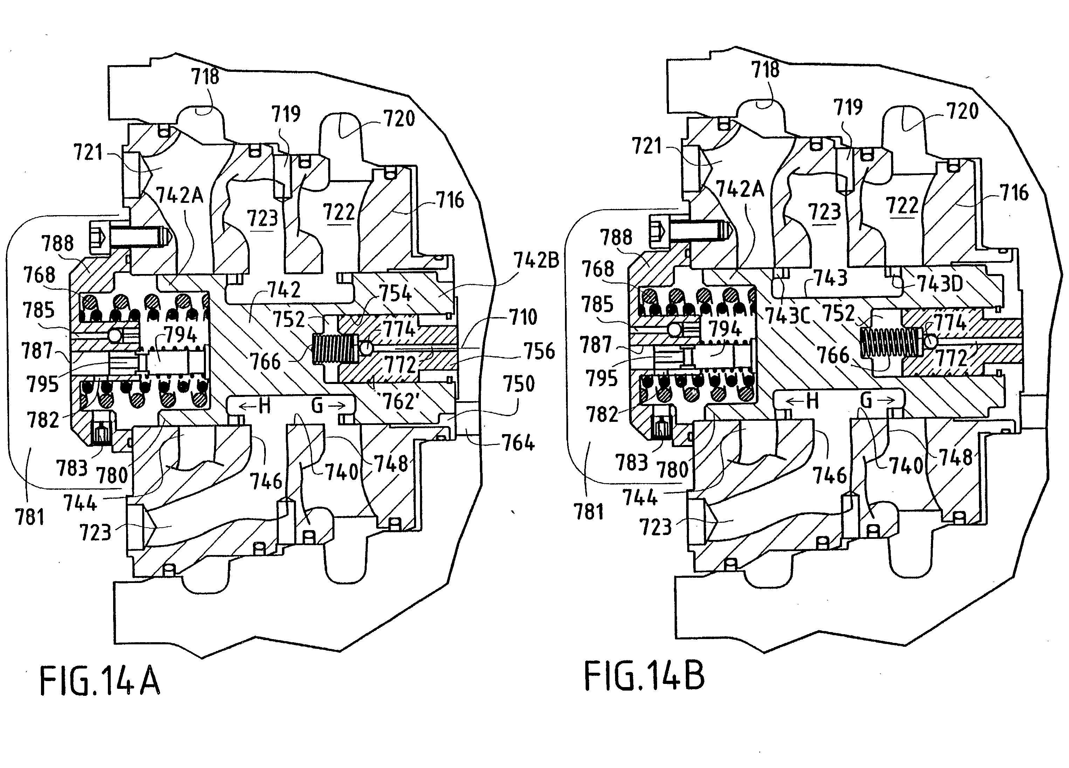

Les figures 14A à 14B montrent encore une autre variante du système de la figure 12. Les première et deuxième chambres de commande 750 et 752 sont analogues à celles des figures 12 et 13. La disposition de la troisième chambre de commande 780 et celle du couvercle 788 sont également les mêmes que sur cette figure.

Toutefois, la variante des figures 14A à 14B permet, dans le sens de déplacement des tiroirs correspondant à la vidange de la chambre 780 (sens H), non seulement l'obtention d'une première étape de déplacement rapide suivie par une étape de déplacement lent, mais également l'obtention d'une deuxième étape de déplacement rapide qui suit cette étape de déplacement lent. En effet, la tige d'obturation 794 présente un conduit interne 795 qui débouche, d'une part, sur sa périphérie axiale et, d'autre part, à son extrémité libre opposée au tiroir 742.

La figure 14A montre la première position du sélecteur, par exemple en situation de grande cylindrée, dans laquelle les conduits de distribution des deuxième et troisième groupes 723 et 722 communiquent librement par les deuxième et troisième voies de communication 746 et 748, qui sont raccordées par la gorge 743 du tiroir.

Dans cette situation, le volume de la troisième chambre de commande 780 est maximal, tandis que celui de la chambre 750 est minimal. Le tiroir a donc été déplacé sur son amplitude maximale dans le sens G.

Pour, à partir de cette situation, commander le déplacement des tiroirs dans le sens H, on alimente le conduit de pilotage 764 de manière à augmenter le volume de la chambre 750. Toutefois, ce déplacement n'est possible que si la chambre 780 se vide correctement. Dans un premier temps, cette chambre se vide sans difficulté par les perçages 782, qui ne sont pas encore masqués par la paroi de la tige 794.

A la fin de cette première étape de déplacement rapide, on parvient à la situation représentée à la figure 14B, sur laquelle la paroi cylindrique de la tige 794 masque les perçages 782. Le déplacement du tiroir s'opère alors selon une étape de déplacement lent, dans laquelle la vidange de la chambre 780 est seulement possible par la restriction 783. Durant cette étape de déplacement lent, les première et deuxième voies de communication 744 et 746 communiquent entre elles par l'intermédiaire des moyens de restriction tels que les passages de restriction 743C pratiqués, dans le tiroir 742, de la même manière que les perçages 243C des figures 5A à 5D. Dans le même temps, les deuxième et troisième voies de communication 746 et 748 communiquent entre elles également par des restrictions, telles que les perçages 743D, qui sont analogues aux perçages 743C mais sont ménagés à l'autre extrémité de la gorge 743. Les perçages 743C et 743D sont répartis sur la circonférence du rebord de la gorge 743. Pour définir, dans la phase intermédiaire, des sections de restriction différentes, les perçages 743C et 743D peuvent avoir des sections différentes ou être plus ou moins nombreux.

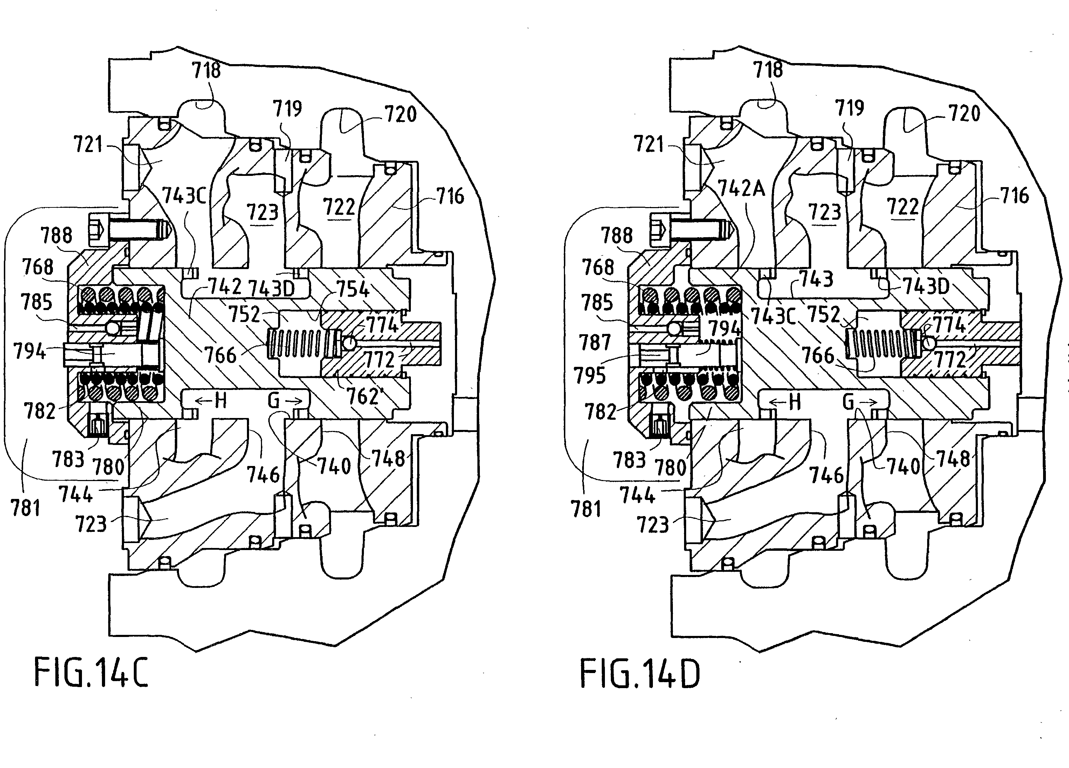

Cette phase de déplacement lent se poursuit tant que le passage 782 est masqué par la paroi cylindrique de la tige 794. On voit que lorsque le tiroir s'est encore davantage déplacé dans le sens H que sur la figure 14B, les extrémités du conduit 795 qui débouchent sur la paroi cylindrique de la tige 794 viennent au regard du passage 782 et rétablissent ainsi une communication sensiblement libre permettant à nouveau une vidange rapide de la chambre 780 (cette situation est identique à celle représentée sur la figure 14D). Lorsque cette nouvelle communication est établie, le déplacement du tiroir dans le sens H continue selon une deuxième étape de déplacement rapide.

La figure 14C montre la situation à l'issue de cette nouvelle étape de déplacement rapide, dans laquelle le tiroir 742 a été déplacé dans le sens H jusqu'à venir en fin de course. Dans cette deuxième position stable du tiroir, par exemple sa position de petite cylindrée, les conduits de distribution des premier et deuxième groupes communiquent librement par les voies de communication 744 et 746 qui sont reliées par la gorge 743. Il faut noter que ce déplacement de tiroir a été commandé par l'alimentation en fluide de la chambre 750 et, du fait de la position du clapet 774, la deuxième chambre de commande 752 s'est également remplie. A partir de la situation de la figure 14C, le déplacement du tiroir dans le sens G, vers sa première position, s'opère en vidangeant les chambres 750 et 752, c'est-à-dire en raccordant le conduit de pilotage 764 à un conduit tel qu'un conduit de retour de fuites.

Comme dans le cas des figures 5A à 5C, la vidange de la chambre 750 s'opère d'abord rapidement, jusqu'à ce que l'extrémité libre du piston 756 vienne en butée contre le fond de l'alésage 740, dans la situation de la figure 14D. A partir de ce moment, la chambre 750 ne peut se vidanger qu'avec la chambre 752 qui, elle-même, ne peut se vider que par l'intermédiaire des deuxièmes moyens de pilotage tels que les rainures hélicoïdales 762', qui permettent seulement un débit de fluide restreint.

Ainsi, dans l'exemple représenté, le déplacement du tiroir de sa deuxième positon à sa première position comprend une première étape de déplacement rapide, suivie par une deuxième étape de déplacement lent. Durant ce déplacement, la troisième chambre de commande 780 se remplit sans difficulté par le conduit de passage inverse 785. La situation de la figure 14D est celle du début de la phase de déplacement lent, qui correspond à la phase intermédiaire. Dans cette phase, les première et deuxième voies de communication communiquent par les restrictions 743C précédemment évoquées, tandis que les deuxième et troisième voies de communication communiquent par les restrictions 743D.

## Revendications

1. Dispositif de sélection de la cylindrée d'un moteur hydraulique ayant au moins deux cylindrées actives de fonctionnement, le moteur comprenant au moins deux conduits principaux (24, 26 ; 124, 126), respectivement un conduit d'alimentation en fluide et un conduit d'échappement de fluide, le dispositif de sélection comprenant un tiroir (142 ; 242 ; 742) disposé dans un alésage (40 ; 740) dans lequel s'ouvrent au moins trois voies de communication (44, 46, 48 ; 110A, 110B, 110C; 744, 746, 748) aptes, par l'intermédiaire de conduits de distribution (21, 22 ; 721, 722, 723) du moteur, à établir une communication sélective entre les conduits principaux et les cylindres dudit moteur, la troisième voie de communication (48 ; 110C ; 748) étant destinée à être raccordée à l'un des conduits principaux du moteur, le dispositif ayant des moyens de sélection (143 ; 243 ; 743) qui, dans une première position stable du tiroir, mettent en communication la deuxième voie de communication (46 ; 110B ; 746) avec la troisième voie de communication (48 ; 110C ; 748) par un passage (P12) entre les deuxième et troisième voies tout en isolant lesdites deuxième et troisième voies de la première voie de communication (44 ; 110A ; 744) et qui, dans une deuxième position stable du tiroir, mettent en communication la deuxième voie de communication avec la première voie de communication par un passage (P23) entre les première et deuxième voies tout en isolant lesdites première et deuxième voies de la troisième voie de communication, les moyens de sélection étant conformés de telle sorte que, lors du déplacement du tiroir entre lesdites positions stables, il existe une situation provisoire dans laquelle le passage entre les première et deuxième voies et le passage entre les deuxième et troisième voies sont simultanément ouverts,
**caractérisé en ce qu'**il comprend des moyens (250, 252, 260, 262' ; 382, 386 ; 482, 486 ; 582, 586 ; 630, 664 ; 750, 752, 762', 780, 782, 783, 790) pour, dans au moins un sens de déplacement du tiroir (142 ; 242 742) entre ses première et deuxième positions stables, entretenir pour un laps de temps ladite situation provisoire selon une phase intermédiaire au cours de laquelle la section d'au moins l'un des passages constitués par le passage (P12) entre les première et deuxième voies et par le passage (P23) entre les deuxième et troisième voies est restreinte.

2. Dispositif selon la revendication **1**, **caractérisé en ce que**, dans la phase intermédiaire, la section de l'un (P12) des passages entre les première et deuxième voies et entre les deuxième et troisième voies est restreinte, tandis que la circulation de fluide dans l'autre desdits (P23) passages est sensiblement libre.

3. Dispositif selon la revendication **2**, **caractérisé en ce que** la phase intermédiaire existe lors d'un déplacement du tiroir (142 ; 242 ; 742) de sa deuxième position à sa première position et **en ce que**, durant cette phase intermédiaire, le passage (P12) entre les deuxième et troisième voies permet une communication sensiblement libre entre les deuxième et troisième voies (46, 48 ; 110B, 110C) tandis que le passage (P23) entre les première et deuxième voies forme une restriction (143C, 243C).

4. Dispositif selon la revendication **1**, **caractérisé en ce que**, dans la phase intermédiaire, les sections (743C, 743D) de chacun des passages entre les première et'deuxième voies et entre les deuxième et troisième voies sont restreintes.

5. Dispositif selon l'une quelconque des revendications **1** à **4, caractérisé en ce qu'**il comprend des moyens (250, 252 ; 382, 384 ; 482, 484 ; 582, 584, 582', 584' ; UC, 630 ; 750, 752, 780, 782, 783, 794, 795) de commande du déplacement du tiroir (142 ; 242 ; 742) dans le sens comprenant la phase intermédiaire aptes à commander une première étape de déplacement rapide du tiroir, de la position initiale de ce dernier à une position correspondant au début'de la phase intermédiaire, et une étape de déplacement freiné durant laquelle se déroule ladite phase intermédiaire.

6. Dispositif selon la revendication **5**, **caractérisé en ce que** les moyens de commande (UC, 630 ; 780, 782, 783, 794, 795) sont aptes à commander, en outre, une deuxième étape de déplacement rapide du tiroir, à l'issue de la phase intermédiaire.

7. Dispositif selon l'une quelconque des revendications **1** à **6**, **caractérisé en ce que** la section (243C ; 743C, 743D) qui est restreinte pendant la phase intermédiaire reste sensiblement constante pendant au moins une partie de la durée de ladite phase intermédiaire.

8. Dispositif selon l'une quelconque des revendications **1** à **7**, **caractérisé en ce que** l'un (P12) des passages entre les première et deuxième voies et entre les deuxième et troisième voies dont la section est restreinte pendant la phase intermédiaire présente une première et une deuxième partie (P'12, 143C), la première partie permettant un débit de fluide sensiblement libre, étant ouverte dans la position initiale du tiroir avant un déplacement comprenant la phase intermédiaire, et étant fermée dans la phase intermédiaire, la deuxième partie (143C) étant équipée d'une restriction qui délimite l'ouverture dudit passage restreint pendant la phase intermédiaire.

9. Dispositif selon l'une quelconque des revendications **1** à **8**, **caractérisé en ce que** les moyens de commande du déplacement du tiroir comprennent une première chambre de commande (250, 750) formée dans l'alésage (40 ; 740), à une extrémité (242B ; 742B) du tiroir (242 ; 742), et une deuxième chambre de commande (252 ; 752), formée dans une cavité (254 ; 754) de cette extrémité (242B ; 742B) du tiroir (242 ; 742) et séparée de la première chambre par un piston de commande (256 ; 756) disposé dans cette cavité (254 ; 754), la première chambre de commande étant susceptible d'être raccordée à des premiers moyens de pilotage (264 ; 764) pour permettre le déplacement de l'ensemble constitué par le tiroir (242 ; 742) et le piston de commande (256 ; 756) dans une première étape de déplacement rapide, à l'issue de laquelle le piston de commande se trouve dans une position extrême (figure 58, figure 5D, figure 14D), et la deuxième chambre de commande (252 ; 752) étant susceptible d'être raccordée à des deuxièmes moyens de pilotage (262, 262' ; 762') pour permettre le déplacement du tiroir (242 ; 742) par rapport au piston de commande (256 ; 756) dans une deuxième étape de déplacement lent.

10. Dispositif selon la revendication **9**, **caractérisé en ce que** les deuxièmes moyens de pilotage comprennent une restriction (260, 262' ; 762') destinée à être interposée sur le trajet d'écoulement d'un fluide de pilotage dans la deuxième étape de déplacement du tiroir (242 ; 742).

11. Dispositif selon l'une quelconque des revendications **9** et **10**, **caractérisé en ce que** les deuxièmes moyens de pilotage comprennent un passage de pilotage (262, 262' ; 762') susceptible de faire communiquer la deuxième chambre (252 ; 752) de commande avec la première chambre de commande (250 ; 750).

12. Dispositif selon les revendications **10** et **11**, **caractérisé en ce que** le passage de pilotage (262' ; 762') comprend une rainure formée à la surface du piston de commande.

13. Dispositif selon l'une quelconque des revendications **9** à **12**, **caractérisé en ce que** les deuxièmes moyens de pilotage comprennent un passage de commande inverse (272 ; 772) équipé de moyens de clapet anti-retour (274 ; 774) ne permettant l'écoulement de fluide de pilotage dans ledit passage que dans le sens favorisant un déplacement du tiroir en sens inverse du sens dans lequel lesdites étapes de déplacement rapide et de déplacement lent sont commandées par les première et deuxième chambres de commande.

14. Dispositif selon l'une quelconque des revendications **1** à **13**, **caractérisé en ce que** les moyens de commande du déplacement du tiroir comprennent une troisième chambre de commande (780) formée dans l'alésage (740), à une extrémité (742A) du tiroir, des moyens de raccordement (787, 782, 783) pour raccorder cette chambre (780) à une réserve de fluide (781) dans un sens de circulation de fluide entre ladite chambre et ladite réserve qui commande une étape de déplacement rapide et une étape de déplacement lent du tiroir, ces moyens de raccordement comprenant une première partie (782, 790) de raccordement sensiblement libre et une deuxième partie (783) équipée d'une restriction et des moyens d'obturation (784) pour obturer ladite première partie en fonction de la position du tiroir (742) et pour ne permettre ainsi la circulation de fluide entre la troisième chambre de commande (780) et ladite réserve de fluide (781), dans ledit sens de circulation de fluide, qu'à travers cette restriction (783).

15. Dispositif selon la revendication **14**, **caractérisé en ce que** les moyens de raccordement (787, 782, 783) sont ménagés dans un élément (788) solidaire de l'alésage (740) et **en ce que** les moyens d'obturation comprennent un élément d'obturation (784, 742A) susceptible de se déplacer avec le tiroir (742).

16. Dispositif selon l'une quelconque des revendications **14** et **15**, **caractérisé en ce qu'**il comporte, en outre, un passage de raccordement inverse (785) équipé de moyens de clapet anti-retour (786), permettant une circulation de fluide entre la troisième chambre de commande (780) et la réserve de fluide (781) en sens inverse dudit sens de circulation de fluide commandant une étape de déplacement rapide et une étape de déplacement lent du tiroir par la troisième chambre (780).

17. Dispositif selon les revendications **9** et **14** et l'une quelconque des revendications **1** à **16**, **caractérisé en ce que** les première et deuxième chambres de commande (750, 752) sont formées à une première extrémité (742B) du tiroir (742) et sont destinées à commander le déplacement du tiroir dans un premier sens de déplacement (H) ayant une première phase intermédiaire et **en ce que** la troisième chambre de commande (780) est formée à l'autre extrémité (742A) du tiroir et est destinée à commander le tiroir dans le sens opposé (G) pour un déplacement ayant une deuxième phase intermédiaire.

18. Dispositif selon l'une quelconque des revendications **1** à **8**, **caractérisé en ce que** les moyens de commande du déplacement du tiroir (142) comprennent une chambre de commande (350) raccordée à un conduit de pilotage (364), des moyens (382, 384 ; 482, 484 ; 582, 584) de dosage d'un volume de fluide de pilotage prévus pour permettre la circulation sensiblement libre dans le conduit de pilotage (364, 364') d'un volume de fluide déterminé dans au moins un premier sens de circulation commandant un déplacement du tiroir (142) dans un premier sens comprenant une première phase intermédiaire et des moyens pour ne permettre la circulation d'un volume supplémentaire de fluide dans le conduit de pilotage (364, 364') dans ce premier sens de circulation que par l'intermédiaire d'une première restriction (386 ; 486 ; 586).

19. Dispositif selon la revendication **18**, **caractérisé en ce que** le conduit de pilotage (364) comprend une chambre de dosage (382 ; 482 ; 582) dans laquelle est disposé un piston de dosage (384 ; 484 ; 584) susceptible sous l'effet d'un fluide de pilotage, d'être déplacé entre une première et une deuxième position pour provoquer la circulation, dans un tronçon du conduit de pilotage (364' ; 364A) s'étendant entre la chambre de dosage (382 ; 482 ; 582) et la chambre de commande (350), d'un volume de fluide correspondant à la course de ce piston et **en ce que**, lorsque le piston de dosage (384 ; 484 ; 584) occupe sa deuxième position de pilotage, la circulation d'un volume supplémentaire de fluide dans ledit tronçon (364' ; 364A) n'est possible, dans au moins le premier sens de circulation, que par l'intermédiaire de la première restriction (386 ; 486 ; 586).

20. Dispositif selon la revendication **19**, **caractérisé en ce que** la chambre de dosage (482 ; 582) est raccordée à une conduite de dérivation (490 ; 364B, 590') équipée de moyens de clapet anti-retour (492 ; 592) ne permettant la circulation du fluide de pilotage dans ladite conduite que dans un deuxième sens de circulation commandant un déplacement du tiroir (142) dans un deuxième sens opposé audit premier sens de déplacement.

21. Dispositif selon l'une quelconque des revendications **18** à **20**, **caractérisé en ce que** les moyens de commande du déplacement du tiroir (142) comprennent, en outre, des moyens de dosage inverses (482, 582') prévus pour permettre la circulation sensiblement libre dans le conduit de pilotage (364) d'un volume de fluide déterminé dans un deuxième sens de circulation commandant un déplacement du tiroir (142) dans un deuxième sens de déplacement, opposé au premier sens de déplacement et comprenant une deuxième phase intermédiaire et des moyens (490, 492, 494, 486 ; 590, 592, 586') pour ne permettre la circulation d'un volume supplémentaire de fluide dans le conduit de pilotage (364) dans ce deuxième sens de circulation que par l'intermédiaire d'une deuxième restriction (494, 486 ; 586').

22. Dispositif selon les revendications **20** et **21**, **caractérisé en ce que** la conduite de dérivation (490 ; 364B, 590') est équipée d'une deuxième restriction (494 ; 586').

23. Dispositif selon la revendication **21**, **caractérisé en ce que** le conduit de pilotage (364) comprend une première chambre de dosage (582) dans laquelle est disposé un premier piston de dosage (584) susceptible, sous l'effet d'un fluide de pilotage, d'être déplacé entre une première et une deuxième position pour provoquer la circulation, dans un premier tronçon (364A) du conduit de pilotage s'étendant entre la première chambre de dosage (582) et la chambre de commande (350) d'un volume de fluide correspondant à la course de ce premier piston de dosage (584) **en ce que**, lorsque ledit premier piston occupe sa deuxième position de pilotage, la circulation d'un volume supplémentaire de fluide dans ledit premier tronçon (364A) n'est possible, dans le premier sens de circulation, que par l'intermédiaire de la première restriction (586) qui est disposée sur ce premier tronçon (364A), ce dernier étant équipé de premiers moyens de clapet anti-retour (591) ne permettant la circulation du fluide de pilotage que dans le premier sens de circulation, **en ce que** le conduit de pilotage comprend une deuxième chambre de dosage (582') dans laquelle est disposé un deuxième piston de dosage (584') susceptible, sous l'effet d'un fluide de pilotage d'être déplacé entre une première et deuxième position pour provoquer la circulation, dans un deuxième tronçon (364B) du conduit de pilotage s'étendant entre la deuxième chambre de pilotage (582') et la chambre de commande (350) d'un volume de fluide correspondant à la course de ce deuxième piston de dosage (584'), et **en ce que**, lorsque ledit deuxième piston occupe sa deuxième position de pilotage, la circulation d'un volume supplémentaire de fluide dans ledit deuxième tronçon (364B) n'est possible, dans le deuxième sens de circulation, que par l'intermédiaire d'une deuxième restriction (586') qui est disposée sur ce deuxième tronçon (364B), ce dernier étant équipé de deuxièmes moyens de clapet anti-retour (592) ne permettant la circulation du fluide de pilotage que dans le deuxième sens de circulation.

24. Dispositif selon la revendication 22 ou 23, **caractérisé en ce que** les moyens de commande du déplacement du tiroir comprennent, en outre, des moyens de réduction de pression (595) destinés à limiter la perte de charge de part et d'autre de la deuxième restriction.

25. Dispositif selon l'une quelconque des revendications 1 à 7, **caractérisé en ce que** les moyens de commande du déplacement du tiroir comprennent des moyens de commande électroniques (UC).

26. Dispositif selon la revendication 25, **caractérisé en ce que** les moyens de commande du déplacement du tiroir comprennent un servomécanisme.

27. Dispositif selon l'une quelconque des revendications 25 et 26, **caractérisé en ce que** les moyens de commande du déplacement du tiroir comprennent des moyens de détection (640, 640') pour, lors d'un déplacement du tiroir au cours duquel l'un des passages entre les première et deuxième voies et entre les deuxième et troisième voies est destiné à être restreint durant la phase intermédiaire, détecter une information permettant de déterminer au moins l'un des paramètres constitués par la position du tiroir, la vitesse de déplacement du tiroir, la perte de charge à travers ledit passage, le débit de fluide à travers ce passage, la pression ou le débit de fluide dans un conduit du moteur hydraulique, la température du fluide dans un conduit du moteur hydraulique ou encore la vitesse de sortie dudit moteur et des moyens de contrôle (UC, 630) aptes à influencer la vitesse de déplacement du tiroir en fonction de l'information détectée.

28. Dispositif selon la revendication **25**, **caractérisé en ce que** les moyens de commande du déplacement du tiroir comprennent une conduite de commande (664) susceptible d'être alimentée en fluide sous pression pour solliciter le déplacement du tiroir dans un sens de déplacement à l'encontre de moyens de rappel et **en ce que** les moyens de contrôle (UC, 630) sont aptes à contrôler la circulation de fluide dans ladite conduite en fonction de l'information détectée par les moyens de détection.

29. Moteur hydraulique à au moins deux cylindrées de fonctionnement, **caractérisé en ce qu'**il comporte un dispositif de sélection selon l'une quelconque des revendications **1** à **28**.

## Patentansprüche

1. Vorrichtung zur Auswahl des Hubraums eines Hydraulikmotors, der mindestens zwei aktive Funktionshubräume besitzt, wobei der Motor mindestens zwei Hauptleitungen (24, 26; 124, 126), nämlich jeweils eine Fluidzuleitung und eine Fluidableitung, umfasst, wobei die Vorrichtung zur Auswahl einen Schieber (142; 242; 742) umfasst, der in einer Bohrung (40; 740) angeordnet ist, in der sich mindestens drei Verbindungswege (44, 46, 48; 110A, 110B, 110C; 744, 746, 748) öffnen, die über Verteilungsleitungen (21, 22; 721, 722, 723) des Motors eine selektive Verbindung zwischen den Hauptleitungen und den Zylindern des Motors herstellen können, wobei der dritte Verbindungsweg (48; 110C, 748) dazu bestimmt ist, an eine der Hauptleitungen des Motors angeschlossen zu werden, wobei die Vorrichtung Auswahlmittel (143; 243; 743) umfasst, die in einer ersten stabilen Position des Schiebers den zweiten Verbindungsweg (46; 110B; 746) mit dem dritten Verbindungsweg (48; 110C; 748) durch einen Durchgang (P12) zwischen dem zweiten und dem dritten Weg verbinden, wobei der zweite und der dritte Weg von dem ersten Verbindungsweg (44; 110A; 744) isoliert werden, und die in einer zweiten stabilen Position des Schiebers den zweiten Verbindungsweg mit dem ersten Verbindungsweg durch einen Durchgang (P23) zwischen dem ersten und dem zweiten Weg verbinden, wobei der erste und der zweite Weg von dem dritten Verbindungsweg isoliert werden, wobei die Auswahlmittel derart ausgeführt sind, daß bei der Verschiebung des Schiebers zwischen den stabilen Positionen eine vorläufige Situation entsteht, in der der Durchgang zwischen dem ersten und dem zweiten Weg und der Durchgang zwischen dem zweiten und dem dritten Weg gleichzeitig offen sind;
**dadurch gekennzeichnet, daß** sie Mittel (250, 252, 260, 262'; 382, 386; 482, 486; 582, 586; 630, 664; 750, 752, 762', 780, 782, 783, 790) umfasst, um in mindestens einer Verschieberichtung des Schiebers (142; 242; 742) zwischen seiner ersten und zweiten stabilen Position für einen Zeitraum die vorläufige Situation gemäß einer Zwischenphase aufrechtzuerhalten, während welcher der Querschnitt von mindestens einem der Durchgänge, die von dem Durchgang (P12) zwischen dem ersten und dem zweiten Weg und von dem Durchgang (P23) zwischen dem zweiten und dem dritten Weg gebildet werden, eingeschränkt ist.

2. Vorrichtung nach Anspruch 1, **dadurch gekennzeichnet, daß** in der Zwischenphase der Querschnitt eines (P12) der Durchgänge zwischen dem ersten und dem zweiten Weg und zwischen dem zweiten und dem dritten Weg eingeschränkt ist, während die Zirkulation des Fluids in dem anderen (P23) der Durchgänge im wesentlichen frei ist.

3. Vorrichtung nach Anspruch 2, **dadurch gekennzeichnet, daß** die Zwischenphase bei einer Verschiebung des Schiebers (142; 242; 742) aus seiner zweiten Position in seine erste Position besteht, und daß während dieser Zwischenphase der Durchgang (P12) zwischen dem zweiten und dem dritten Weg eine im wesentlichen freie Verbindung zwischen dem zweiten und dem dritten Weg (46, 48; 110B, 110C) ermöglicht, während der Durchgang (P23) zwischen dem ersten und dem zweiten Weg eine Einschränkung (143C, 243C) bildet.

4. Vorrichtung nach Anspruch 1, **dadurch gekennzeichnet, daß** in der Zwischenphase die Querschnitte (743C, 743D) jedes der Durchgänge zwischen dem ersten und dem zweiten Weg und zwischen dem zweiten und dem dritten Weg eingeschränkt sind.

5. Vorrichtung nach einem der Ansprüche 1 bis 4, **dadurch gekennzeichnet, daß** sie Mittel (250, 252; 382, 384; 482, 484; 582, 584, 582', 584'; UC, 630; 750, 752, 780, 782, 783, 794, 795) zur Steuerung der Verschiebung des Schiebers (142; 242; 742) in die die Zwischenphase umfassende Richtung besitzt, die einen ersten Schritt der raschen Verschiebung des Schiebers von der ursprünglichen Position desselben in eine Position, die dem Beginn der Zwischenphase entspricht, und einen Schritt der gebremsten Verschiebung, während dessen die Zwischenphase abläuft, steuern kann.

6. Vorrichtung nach Anspruch 5, **dadurch gekennzeichnet, daß** die Steuermittel (UC, 630; 780, 782, 783, 794, 795) ferner einen zweiten Schritt der raschen Verschiebung des Schiebers nach der Zwischenphase steuern können.

7. Vorrichtung nach einem der Ansprüche 1 bis 6, **dadurch gekennzeichnet, daß** der Querschnitt (243C; 743C, 743D), der während der Zwischenphase eingeschränkt ist, im wesentlichen während mindestens eines Teils der Dauer der Zwischenphase konstant bleibt.

8. Vorrichtung nach einem der Ansprüche 1 bis 7, **dadurch gekennzeichnet, daß** einer (P12) der Durchgänge zwischen dem ersten und dem zweiten Weg und zwischen dem zweiten und dem dritten Weg, dessen Querschnitt während der Zwischenphase eingeschränkt ist, einen ersten und einen zweiten Teil (P'12, 143C) aufweist, wobei der erste Teil, der einen im wesentlichen freien Fluiddurchfluss ermöglicht, in der ursprünglichen Position des Schiebers vor einer Verschiebung, die die Zwischenphase umfaßt, offen ist und in der Zwischenphase geschlossen ist, wobei der zweite Teil (143C) mit einer Einschränkung versehen ist, die die Öffnung des eingeschränkten Durchgangs während der Zwischenphase begrenzt.

9. Vorrichtung nach einem der Ansprüche 1 bis 8, **dadurch gekennzeichnet, daß** die Mittel zur Steuerung der Verschiebung des Schiebers eine erste Steuerkammer (250, 750), die in der Bohrung (40; 740) an einem Ende (242B; 742B) des Schiebers (242; 742) ausgebildet ist, und eine zweite Steuerkammer (252; 752), die in einem Hohlraum (254; 754) dieses Endes (242B; 742B) des Schiebers (242; 742) ausgebildet ist und von der ersten Kammer durch einen Steuerkolben (256; 756) getrennt ist, der in diesem Hohlraum (254; 754) angeordnet ist, umfassen, wobei die erste Steuerkammer an erste Regulierungsmittel (264; 764) angeschlossen ist, um die Verschiebung der von dem Schieber (242; 742) und dem Steuerkolben (256; 756) gebildeten Einheit in einem ersten Schritt der raschen Verschiebung zu ermöglichen, nach dem sich der Steuerkolben in einer äußersten Position (Figur 5B, Figur 5D, Figur 14D) befindet, und wobei die zweite Steuerkammer (252; 752) an zweite Regulierungsmittel (262, 262'; 762') angeschlossen werden kann, um die Verschiebung des Schiebers (242; 742) in Bezug auf den Steuerkolben (256; 756) in einem zweiten Schritt der langsamen Verschiebung zu ermöglichen.

10. Vorrichtung nach Anspruch 9, **dadurch gekennzeichnet, daß** die zweiten Regulierungsmittel eine Einschränkung (260, 262'; 762') umfassen, die dazu bestimmt ist, auf der Fließbahn eines Regulierungsfluids in dem zweiten Schritt der Verschiebung des Schiebers (242; 742) zwischengeschaltet zu werden.

11. Vorrichtung nach einem der Ansprüche 9 und 10, **dadurch gekennzeichnet, daß** die zweiten Regulierungsmittel einen Regulierungsdurchgang (262, 262'; 762') umfassen, der die zweite Steuerkammer (252; 752) mit der ersten Steuerkammer (250; 750) in Verbindung bringen kann.

12. Vorrichtung nach den Ansprüchen 10 und 11, **dadurch gekennzeichnet, daß** der Regulierungsdurchgang (262'; 762') eine Nut umfasst, die an der Oberfläche des Steuerkolbens ausgebildet ist.

13. Vorrichtung nach einem der Ansprüche 9 bis 12, **dadurch gekennzeichnet, daß** die zweiten Regulierungsmittel einen entgegengesetzten Steuerdurchgang (272; 772) umfassen, der mit Rückschlagklappenmitteln (274; 774) ausgestattet ist, die das Fließen von Regulierungsfluid in dem Durchgang nur in die Richtung gestatten, die eine Verschiebung des Schiebers in die Richtung begünstigen, die zu der Richtung entgegengesetzt ist, in die die Schritte der raschen Verschiebung und der langsamen Verschiebung von der ersten und der zweiten Steuerkammer gesteuert werden.

14. Vorrichtung nach einem der Ansprüche 1 bis 13, **dadurch gekennzeichnet, daß** die Mittel zur Steuerung der Verschiebung des Schiebers eine dritte Steuerkammer (780), die in der Bohrung (740) an einem Ende (742A) des Schiebers ausgebildet ist, und Anschlussmittel (787, 782, 783) für den Anschluss dieser Kammer (780) an einen Fluidbehälter (781) in eine Fluidzirkulationsrichtung zwischen der Kammer und dem Behälter, die einen Schritt der raschen Verschiebung und einen Schritt der langsamen Verschiebung des Schiebers steuert, umfassen, wobei diese Anschlussmittel einen ersten Teil (782, 790) für den im wesentlichen freien Anschluss und einen zweiten Teil (783), der mit einer Einschränkung versehen ist, und Verschlussmittel (784), um den ersten Teil in Abhängigkeit von der Position des Schiebers (742) zu verschließen und somit die Fluidzirkulation zwischen der dritten Steuerkammer (780) und dem Fluidbehälter (781) in die Fluidzirkulationsrichtung nur durch diese Einschränkung (783) zu ermöglichen, umfassen.

15. Vorrichtung nach Anspruch 14, **dadurch gekennzeichnet, daß** die Anschlussmittel (787, 782, 783) in einem fest mit der Bohrung (740) verbundenen Element (788) vorgesehen sind und daß die Verschlussmittel ein Verschlusselement (784, 742A) umfassen, das sich mit dem Schieber (742) verschieben kann.

16. Vorrichtung nach einem der Ansprüche 14 und 15, **dadurch gekennzeichnet, daß** sie ferner einen entgegengesetzten Anschlussdurchgang (785) umfasst, der mit Rückschlagklappenmitteln (786) versehen ist, die eine Fluidzirkulation zwischen der dritten Steuerkammer (780) und dem Fluidbehälter (781) in die zu der Fluidzirkulationsrichtung entgegengesetzte Richtung ermöglichen, welche einen Schritt der raschen Verschiebung und einen Schritt der langsamen Verschiebung des Schiebers durch diedritte Kammer (780) steuern.

17. Vorrichtung nach den Ansprüchen 9 und 14 und einem der Ansprüche 1 bis 16, **dadurch gekennzeichnet, daß** die erste und die zweite Steuerkammer (750, 752) an einem ersten Ende (742B) des Schiebers (742) ausgebildet und dazu bestimmt sind, die Verschiebung des Schiebers in eine erste Verschieberichtung (H) zu steuern, die eine erste Zwischenphase aufweist, und daß die dritte Steuerkammer (780) am anderen Ende (742A) des Schiebers ausgebildet und dazu bestimmt ist, den Schieber in die entgegengesetzte Richtung (G) für eine Verschiebung mit einer zweiten Zwischenphase zu steuern.

18. Vorrichtung nach einem der Ansprüche 1 bis 8, **dadurch gekennzeichnet, daß** die Mittel zur Steuerung der Verschiebung des Schiebers (142) eine Steuerkammer (350), die an eine Regulierungsleitung (364) angeschlossen ist, Mittel (382, 384; 482, 484; 582, 584) zur Dosierung eines Steuerfluidvolumens, die dazu vorgesehen sind, in der Regulierungsleitung (364, 364') die im wesentlichen freie Zirkulation eines bestimmten Fluidvolumens in mindestens eine erste Zirkulationsrichtung zu ermöglichen, die eine Verschiebung des Schiebers (142) in eine erste Richtung, die eine erste Zwischenphase umfasst, steuert, und Mittel, um die Zirkulation eines zusätzlichen Fluidvolumens in der Regulierungsleitung (364, 364') in dieser ersten Zirkulationsrichtung nur über eine erste Einschränkung (386; 486; 586) zu ermöglichen, umfassen.

19. Vorrichtung nach Anspruch 18, **dadurch gekennzeichnet, daß** die Regulierungsleitung (364) eine Dosierkammer (382; 482; 582) umfasst, in der ein Dosierkolben (384; 484; 584) angeordnet ist, der unter der Wirkung eines Steuerfluids zwischen einer ersten und einer zweiten Position verschoben werden kann, um die Zirkulation eines Fluidvolumens, das dem Weg dieses Kolbens entspricht, in einem Abschnitt der Regulierungsleitung (364'; 364A), der sich zwischen der Dosierkammer (382; 482; 582) und der Steuerkammer (350) erstreckt, zu bewirken, und daß, wenn der Dosierkolben (384; 484; 584) seine zweite Regulierungsposition einnimmt, die Zirkulation eines zusätzlichen Fluidvolumens in dem genannten Abschnitt (364'; 364A) zumindest in die erste Zirkulationsrichtung nur über die erste Einschränkung (386; 486; 586) möglich ist.

20. Vorrichtung nach Anspruch 19, **dadurch gekennzeichnet, daß** die Dosierkammer (482; 582) an eine Abzweigleitung (490; 364B, 590') angeschlossen ist, die mit Rückschlagklappenmitteln (492; 592) versehen ist, die die Zirkulation des Regulierungsfluids in der Leitung nur in eine zweite Zirkulationsrichtung ermöglichen, die eine Verschiebung des Schiebers (142) in eine zweite, zu der ersten Verschieberichtung entgegengesetzte Richtung steuert.

21. Vorrichtung nach einem der Ansprüche 18 bis 20, **dadurch gekennzeichnet, dass** die Mittel zur Steuerung der Verschiebung des Schiebers (142) ferner entgegengesetzte Dosiermittel (482, 582'), die dazu vorgesehen sind, die im wesentlichen freie Zirkulation eines bestimmten Fluidvolumens in der Regulierungsleitung (364) in eine zweite Zirkulationsrichtung zu ermöglichen, die eine Verschiebung des Schiebers (142) in eine zweite Verschieberichtung steuert, die zu der ersten Verschieberichtung entgegengesetzt ist und eine zweite Zwischenphase einschließt, und Mittel (490, 492, 494, 486; 590, 592, 586'), um die Zirkulation eines zusätzlichen Fluidvolumens in der Regulierungsleitung (364) in diese zweite Zirkulationsrichtung nur über eine zweite Einschränkung (494, 486; 586') zu ermöglichen, umfassen.

22. Vorrichtung nach den Ansprüchen 20 und 21, **dadurch gekennzeichnet, daß** die Abzweigleitung (490; 364B, 590') mit einer zweiten Einschränkung (494; 586') versehen ist.

23. Vorrichtung nach Anspruch 21, **dadurch gekennzeichnet, daß** die Regulierungsleitung (364) eine erste Dosierkammer (582) umfasst, in der ein erster Dosierkolben (584) angeordnet ist, der unter der Wirkung eines Regulierungsfluids zwischen einer ersten und einer zweiten Position verschoben werden kann, um die Zirkulation eines Fluidvolumens, das dem Weg dieses ersten Dosierkolbens (584) entspricht, in einem ersten Abschnitt (364A) der Regulierungsleitung, der sich zwischen der ersten Dosierkammer (582) und der Steuerkammer (350) erstreckt, zu bewirken, und daß, wenn der erste Kolben seine zweite Regulierungsposition einnimmt, die Zirkulation eines zusätzlichen Fluidvolumens in dem ersten Abschnitt (364A) in die erste Zirkulationsrichtung nur über die erste Einschränkung (586), die auf diesem ersten Abschnitt (364A) angeordnet ist, möglich ist, wobei letztgenannte mit ersten Rückschlagklappenmitteln (591) versehen ist, die die Zirkulation des Regulierungsfluids nur in die erste Zirkulationsrichtung ermöglichen, und daß die Regulierungsleitung eine zweite Dosierkammer (582') umfasst, in der ein zweiter Dosierkolben (584') angeordnet ist, der unter der Wirkung eines Regulierungsfluids zwischen einer ersten und einer zweiten Position verschoben werden kann, um in einem zweiten Abschnitt (364B) der Regulierungsleitung, der sich zwischen der zweiten Regulierungskammer (582') und der Steuerkammer (350) erstreckt, die Zirkulation eines Fluidvolumens, das dem Weg dieses zweiten Dosierkolbens (584') entspricht, zu bewirken, und daß, wenn dieser zweite Kolben seine zweite Regulierungsposition einnimmt, die Zirkulation eines zusätzlichen Fluidvolumens in dem zweiten Abschnitt (364B) in die zweite Zirkulationsrichtung nur über eine zweite Einschränkung (586') möglich ist, die auf diesem zweiten Abschnitt (364B) angeordnet ist, wobei letztgenannte mit zweiten Rückschlagklappenmitteln (592) versehen ist, die die Zirkulation des Regulierungsfluids nur in die zweite Zirkulationsrichtung ermöglichen.

24. Vorrichtung nach Anspruch 22 oder 23, **dadurch gekennzeichnet, daß** die Mittel zur Steuerung der Verschiebung des Schiebers ferner Mittel zur Druckminderung (595) umfassen, die dazu bestimmt sind, den Druckverlust beiderseits der zweiten Einschränkung zu begrenzen.

25. Vorrichtung nach einem der Ansprüche 1 bis 7, **dadurch gekennzeichnet, daß** die Mittel zur Steuerung der Verschiebung des Schiebers elektronische Steuermittel (UC) umfassen.

26. Vorrichtung nach Anspruch 25, **dadurch gekennzeichnet, daß** die Mittel zur Steuerung der Verschiebung des Schiebers einen Servomechanismus umfassen.

27. Vorrichtung nach einem der Ansprüche 25 und 26, **dadurch gekennzeichnet, daß** die Mittel zur Steuerung der Verschiebung des Schiebers Erfassungsmittel (640, 640') umfassen, um bei einer Verschiebung des Schiebers, bei der einer der Durchgänge zwischen dem ersten und dem zweiten Weg und zwischen dem zweiten und dem dritten Weg dazu bestimmt ist, während der Zwischenphase eingeschränkt zu werden. eine Information zu erfassen, die es ermöglicht, zumindest einen der Parameter zu erfassen, die von der Position des Schiebers, der Verschiebegeschwindigkeit des Schiebers, dem Druckverlust durch den Durchgang, der Fluiddurchflussmenge durch diesen Durchgang, dem Druck oder der Fluiddurchflussmenge in einer Leitung des Hydraulikmotors, der Temperatur des Fluids in einer Leitung des Hydraulikmotors oder auch der Ausgangsgeschwindigkeit des Motors gebildet werden, und Kontrollmittel (UC, 630) umfassen, die die Verschiebegeschwindigkeit des Schiebers in Abhängigkeit von der erfassten Information beeinflussen können.

28. Vorrichtung nach Anspruch 25, **dadurch gekennzeichnet, daß** die Mittel zur Steuerung der Verschiebung des Schiebers eine Steuerleitung (664) umfassen, die mit Druckfluid gespeist werden kann, um die Verschiebung des Schiebers in eine Verschieberichtung gegen Rückstellmittel zu belasten, und daß die Kontrollmittel (UC, 630) die Fluidzirkulation in der Leitung in Abhängigkeit von der von den Erfassungsmitteln erfassten Information kontrollieren können.

29. Hydraulikmotor mit mindestens zwei Funktionshubräumen, **dadurch gekennzeichnet, daß** er eine Vorrichtung zur Auswahl nach einem der Ansprüche 1 bis 28 umfasst.

## Claims

1. A selector device for selecting the cylinder capacity of a hydraulic motor having at least two active operating cylinder capacities, the motor comprising at least two main ducts (24, 26; 124, 126) respectively constituting a fluid feed duct and a fluid exhaust duct, the selector device comprising a slide (142; 242; 742) placed in a bore (40; 740) into which at least three communication ports (44, 46, 48; 110A, 110B, 110C; 744, 746, 748) open out, suitable, via distribution ducts (21, 22; 721, 722, 723) of the motor, for establishing selective communication between the main ducts and the cylinders of said motor, the third communication port (48; 110C; 748) being designed to be connected to one of the main ducts of the motor, the device having selector means (143; 243; 743) which, in a first stable position of the slide, put the second communication port (46; 110B; 746) into communication with the third communication port (48; 110C; 748) via a passage (P12) between the second and third ports, while isolating said second and third ports from the first communication port (44; 110A; 744), and which in a second stable position of the slide, put the second communication port into communication with the first communication port via a passage (P23) between the first and second ports while isolating said first and second ports from the third communication port, the selector means being constituted in such a manner that during displacement of the slide between said stable positions, there exists a temporary situation in which both the passage between the first and second ports and the passage between the second and third ports are open simultaneously;
the device being **characterised in that** it comprises means (250, 252, 260, 262'; 382, 386; 482, 486; 582, 586; 630, 664; 750, 752, 762', 780, 782, 783, 790) effective, in at least one displacement direction of the slide (142; 242; 742) between its first and second stable positions, to maintain said temporary situation for a time lapse in an intermediate stage during which the section of at least one of the passages constituted by the passage (P12) between the first and second ports and by the passage (P23) between the second and third ports is constricted.

2. A device according to claim 1, **characterised in that**, during the intermediate stage, the section of one (P12) of the passages between the first and second ports and between the second and third ports is constricted, while the fluid flow in the other (P23) of said passages is substantially free.

3. A device according to claim 2, **characterised in that** the intermediate stage takes place during displacement of the slide (142; 242; 742) from its second position to its first position and **in that**, during this intermediate stage, the passage (P12) between the second and third ports allows for substantially free communication between the second and third ports (46, 48; 110B, 110C), while the passage (P23) between the first and second ports forms a constriction (143C, 243C).

4. A device according to claim 1, **characterised in that**, during the intermediate stage, the sections (743C, 743D) of each of the passages between the first and second ports and between the second and third ports are constricted.

5. A device according to any one of claims 1 to 4, **characterised in that** it includes means (250, 252; 382, 384; 482, 484; 582, 584, 582', 584'; UC, 630; 750, 752, 780, 782, 783, 794, 795) for controlling the displacement of the slide (142; 242; 742) in the direction that includes the intermediate stage, said means being capable of implementing a fast first displacement step of the slide from its initial position to a position corresponding to the start of the intermediate stage, and a braking displacement step during which said intermediate stage takes place.

6. A device according to claim 5, **characterised in that** the control means (UC, 630; 780, 782, 783, 794, 795) are also capable of implementing a fast second displacement step of the slide after the intermediate stage.

7. A device according to any one of claims 1 to 6, **characterised in that** the section (243C; 743C, 743D) which is constricted during the intermediate stage remains substantially constant during at least part of the duration of said intermediate stage.

8. A device according to any one of claims 1 to 7, **characterised in that** one (P12) of the passages between the first and second ports and between the second and third ports having a constricted section during the intermediate stage has a first and second portion (P'12, 143C), the first portion enabling fluid to flow substantially freely, being open in the initial position of the slide before a displacement comprising the intermediate stage, and being closed in the intermediate stage, the second portion (143C) being fitted with a constriction which defines the opening of said constricted passage during the intermediate stage.

9. A device according to any one of claims 1 to 8, **characterised in that** the control means for controlling displacement of the slide comprise a first control chamber (250; 750) formed in the bore (40; 740) at one end (242B; 742B) of the slide (242; 742), and a second control chamber (252; 752) formed in a cavity (254; 754) at said end (242B; 742B) of the slide (242; 742) and separated from the first chamber by a control piston (256; 756) disposed in said cavity (254; 754), the first control chamber being suitable for being connected to first pilot means (264; 764) to enable the assembly constituted by the slide (242; 742) and the control piston (256; 756) to be displaced during a fast first displacement step, at the end of which the control piston is in an extreme position (Figure 5B, Figure 5D, Figure 14D), and the second control chamber (252; 752) being suitable for being connected to second pilot means (262, 262'; 762') to enable the slide (242; 742) to be displaced relative to the control piston (256; 756) in a slow second displacement step.

10. A device according to claim 9, **characterised in that** the second pilot means include a constriction (260, 262'; 762') designed to be interposed on the flow path of a pilot fluid in the second displacement step of the slide (242; 742).

11. A device according to any one of claims 9 and 10, **characterised in that** the second pilot means comprise a pilot passage (262, 262'; 762') suitable for putting the second control chamber (252; 752) into communication with the first control chamber (250; 750).

12. A device according to claims 10 and 11, **characterised in that** the pilot passage (262'; 762') comprises a groove formed in the surface of the control piston.

13. A device according to any one of claims 9 to 12, **characterised in that** the second pilot means comprise a return control passage (272; 772) fitted with check valve means (274; 774) allowing pilot fluid to flow in said passage only in the direction favoring displacement of the slide in the direction opposite to the direction in which said fast displacement and slow displacement steps are controlled via the first and second control chambers.

14. A device according to any one of claims 1 to 13, **characterised in that** the control means for controlling the displacement of the slide comprise a third control chamber (780) formed in the bore (740) at one end (742A) of the slide, connection means (787, 782, 783) for connecting the chamber (780) to a fluid reserve (781) in a fluid flow direction between said chamber and said reserve which causes the slide to perform a fast displacement step and a slow displacement step, the connection means comprising a substantially free first connection portion (782, 790) and a second portion (783) having a constriction, and closure means (784) for closing said first portion as a function of the position of the slide (742) and thus for allowing the fluid to flow in said flow direction between the third control chamber (780) and said fluid reserve (781) only through the constriction (783).

15. A device according to claim 14, **characterised in that** the connection means (787, 782, 783) are formed in a member (788) secured to the bore (740), and **in that** the closure means comprise a closure member (784, 742A) that is capable of being displaced with the slide (742).

16. A device according to any one of claims 14 and 15, **characterised in that** it also includes a reverse connection passage (785) having anti-retum valve means (786), enabling fluid to flow between the third control chamber (780) and the fluid reserve (781) in the direction opposite said fluid flow direction causing the slide to perform a fast displacement step and a slow displacement step via the third chamber (780).

17. A device according to claims 9 and 14 and to any one of claims 1 to 16, **characterised in that** the first and second control chambers (750, 752) are formed at a first end (742B) of the slide (742) and are designed to cause the slide to be displaced in a first displacement direction (H) having a first intermediate stage, and **in that** the third control chamber (780) is formed at the other end (742A) of the slide and is designed to cause the slide to be displaced in the opposite direction (G) for a displacement having a second intermediate stage.

18. A device according to any one of claims 1 to 8, **characterised in that** the control means for controlling displacement of the slide (142) comprise a control chamber (350) connected to a pilot duct (364), means (382, 384; 482, 484; 582, 584) for measuring a volume of pilot fluid and designed to enable a determined volume of fluid to flow substantially freely in the pilot duct (364, 364') in at least a first flow direction causing the slide (142) to be displaced in a first direction including a first intermediate stage, and means for allowing an additional volume of fluid to flow in the pilot duct (364, 364') in said first flow direction only via a first constriction (386; 486; 586).

19. A device according to claim 18, **characterised in that** the pilot duct (364) has a measuring chamber (382; 482; 582) in which there is disposed a measuring piston (384; 484; 584) suitable, under the effect of a pilot fluid, for being displaced between a first position and a second position to cause a volume of fluid corresponding to the stroke of said piston to flow in a segment of pilot duct (364'; 364A) extending between the measuring chamber (382; 482; 582) and the control chamber (350), and **in that** when the measuring piston (384; 484; 584) is occupying its second pilot position, an additional volume of fluid can flow in said segment (364'; 364A), at least in the first flow direction, only via the first constriction (386; 486; 586).

20. A device according to claim 19, **characterised in that** the measuring chamber (482; 582) is connected to a bypass duct (490; 364B, 590') fitted with check valve means (492; 592) allowing pilot fluid to flow in said duct only in a second flow direction causing the slide (142) to be displaced in a second direction opposite said first displacement direction.

21. A device according to any one of claims 18 to 20, **characterised in that** the control means for controlling displacement of the slide (142) further comprise inverse measurement means (482, 582') for allowing substantially free circulation of a determined volume of fluid in the pilot duct (364) in a second flow direction causing the slide (142) to be displaced in a second displacement direction opposite the first displacement direction and including a second intermediate stage, and means (490, 492, 494, 486; 590, 592, 586') for allowing an additional volume of fluid to flow in the pilot duct (364) in said second flow direction only via a second constriction (494, 486; 586').

22. A device according to claims 20 and 21, **characterised in that** the bypass duct (490; 364B, 590') is fitted with a second constriction (494; 586').

23. A device according to claim 21, **characterised in that** the pilot duct (364) has a first measuring chamber (582) in which there is disposed a first measuring piston (584) suitable, under the effect of a pilot fluid, for being displaced between a first position and a second position to cause a volume of fluid corresponding to the stroke of the first measuring piston (584) to flow in a first segment (364A) of the pilot duct extending between the first measuring chamber (582) and the control chamber (350), **in that** when said first piston is in its second pilot position, the flow of an additional volume of fluid in said first segment (364A) and in the first flow direction is possible only via the first constriction (586) which is disposed in said first segment (364A), which segment is fitted with first check valve means (591) allowing the pilot fluid to flow only in the first flow direction, **in that** the pilot duct has a second measuring chamber (582') in which a second measuring piston (584') is disposed which is suitable under the effect of a pilot fluid for being displaced between a first position and a second position to cause a volume of fluid corresponding to the stroke of said second measuring piston (584') to flow in a second segment (364B) of the pilot duct extending between the second pilot chamber (582') and the control chamber (350), and **in that** when said second piston is in its second pilot position, an additional volume of fluid can flow in said second segment (364B) in said second flow direction only via a second constriction (586') which is disposed on said second segment (364B), which segment is fitted with second check valve means (592) allowing pilot fluid to flow only in the second flow direction.

24. A device according to claim 22 or 23, **characterised in that** the control means for controlling displacement of the slide further comprise pressure reducer means (595) for limiting the head loss across the second constriction.

25. A device according to any one of claims 1 to 7, **characterised in that** the control means for causing the slide to be displaced comprise electronic control means (UC).

26. A device according to claim 25, **characterised in that** the control means for causing the slide to be displaced comprise a servo-mechanism.

27. A device according to any one of claims 25 and 26, **characterised in that** the control means for controlling displacement of the slide comprise detector means (640, 640') for, during displacement of the slide, during which one of the passages between the first and second ports and between the second and third ports is designed to be constricted during the intermediate stage, detecting information making it possible to determine at least one of the parameters constituted by the position of the slide, the displacement speed of the slide, the loss of head through said passage, the flow rate through the passage, the pressure or the fluid flow rate in a duct of the hydraulic motor, the temperature of the fluid in a duct of the hydraulic motor, or even the output speed of the motor, and electronic control means (UC, 630) which are capable of influencing the displacement speed of the slide as a function of the information detected.

28. A device according to claim 25, **characterised in that** the control means for controlling the displacement of the slide comprise a control duct (664) that is capable of being fed with fluid under pressure so as to urge the displacement of the slide in a displacement direction that is against the return means, and **in that** the control means (UC, 630) are capable of controlling the fluid flow in said duct as a function of the information detected by the detector means.

29. A hydraulic motor having at least two operating cylinder capacities, and **characterised in that** it includes a selector device according to any one of claims 1 to 28.
